# EUROPEAN PATENT APPLICATION

(11) **EP 4 834 979 A1**
(43) Date of publication of application: **04.11.2026**
(21) Application number: 24912568.3
(22) Date of filing: 18.12.2024
(51) Int. Cl.: C08J 5/18, B29C 55/14, B32B 15/08, B32B 27/00, H01G 4/32, H01M 4/66, B29K 81/00

(54) **POLYPHENYLENE SULFIDE FILM, POLYPHENYLENE SULFIDE FILM ROLL, METALLIZED FILM COMPOSED OF SAME, CURRENT COLLECTOR FOIL, ELECTRODE PLATE, AND SECONDARY BATTERY**

(30) Priority: 25.12.2023 JP 2023217684; 25.12.2023 JP 2023217685
(71) Applicant: Toray Industries, Inc., Tokyo 103-8666 (JP)
(72) Inventor: MORISHITA, Kenta, Anpachi-gun, Gifu 503-2395 (JP); TAKAHASHI, Kenta, Otsu-shi, Shiga 520-8558 (JP); SAWAMI, Ryo, Anpachi-gun, Gifu 503-2395 (JP); KOBAYASHI, Ryo, Anpachi-gun, Gifu 503-2395 (JP); OGATA, Daisuke, Otsu-shi, Shiga 520-2141 (JP)
(74) Representative: Kador & Partner Part mbB
(86) International application number: PCT/JP2024/044761
(87) International publication number: WO 2025/142679

(57) **Abstract**

Disclosed is a polyphenylene sulfide film wherein the extension rate in the width direction at 230 °C is 0.0% or more and 13.0% or less as measured by thermomechanical analysis, and the difference between the maximum value and the minimum value among the extension rates in the longitudinal direction, the 45° direction, the width direction and the 135° direction at 150 °C is 1.6 % or less. Also disclosed is a film roll which is obtained by winding a polyphenylene sulfide film which has a width of 700 mm or more. Also disclosed are: a metalized film and current collector foil, each of which is obtained by providing a metal layer on at least one surface of the polyphenylene sulfide film; an electrode plate which is obtained by forming an electrode material layer on the surface of the current collector foil; and a secondary battery which uses the electrode plate. Our invention provides a polyphenylene sulfide film which has excellent workability.

## Description

### Technical Field of the Invention

Our invention relates to a polyphenylene sulfide film, a polyphenylene sulfide film roll, a metalized film composed thereof, a current collector foil, an electrode plate and a secondary battery.

### Background Art of the Invention

Polyphenylene sulfide films excellent in heat resistance, hydrolysis resistance, flame retardancy, chemical resistance, electric insulation or the like have been suitably used for electric/electronic equipment, machinery parts and motor parts.

Such characteristics such as heat resistance and chemical resistance have been utilized to apply them to dielectrics of film capacitor while they are gradually applied to battery parts such as current collector foil of lithium-ion battery recently. It is necessary for these applications that the base material is excellent in workability so that problems such as wrinkle and crack are prevented in a process of forming metal layer or electrode or the like. Above all, examples of applications of polyphenylene sulfide film excellent in workability are the one resistant to crack and hole (Patent document 1), the one excellent in adhesiveness (Patent documents 2 and 3), the one excellent in dimension stability (Patent document 4).

### Prior art documents

### Patent documents

Patent document 1: WO2022/004414
Patent document 2: JP2019-89317-A
Patent document 3: JP2016-69445-A
Patent document 4: JP2008-202127-A

### Summary of the Invention

### Problems to be solved by the Invention

Although polyphenylene sulfide films generally have a good workability, they have insufficient characteristics such as in-plane uniformity of dimension change and handling ability which is required for products processed by forming metal layer or electrode.

Therefore, it would be helpful to provide a polyphenylene sulfide film excellent in workability.

### Means for solving the Problems

To solve the above-described problem, our invention has the following configuration.
[1] A polyphenylene sulfide film defined as a film chiefly comprising a polyphenylene sulfide, wherein a width directional extension rate determined by a Thermo-Mechanical Analysis (TMA) at 230 °C is 0.0 % or more and 13.0 % or less and a difference between a maximum and a minimum of extension rates in a longitudinal direction, a 45° direction, a width direction and a 135° direction determined at 150 °C by the TMA is 1.6% or less.
[2] The polyphenylene sulfide film according to [1], having 0.0 % or more and 8.0 % or less of width directional extension rate variation between 150 °C and 230 °C determined by the TMA.
[3] The polyphenylene sulfide film according to [1] or [2], wherein a film sample cut into 50 mm x 50 mm along the longitudinal and width directions has extension rates of 0.0% or more and 9.0 % or less, in the longitudinal direction, the 45° direction, the width direction and the 135° direction determined at 230 °C by the TMA.
[4] The polyphenylene sulfide film according to any one of [1] to [3], wherein a crystallinity calculated from a fusion enthalpy determined with a Differential Scanning Calorimeter (DSC) is 29 % or more and 40 % or less.
[5] The polyphenylene sulfide film according to any one of [1] to [4], wherein a stress F2 of 2% extension rate and a stress F5 of 5% extension rate of the film determined at a room temperature of 23 °C by a tensile test satisfy a formula of $36.0 \left[MPa\right] < F 5 - F 2 \leq 54.0 \left[MPa\right] .$
[6] The polyphenylene sulfide film according to any one of [1] to [5], wherein a longitudinal dielectric constant ε'_{MD} measured with a molecular orientation meter is 3.00 or more and 3.30 or less and an MOR_c (Corrected Molecular Orientation Ratio) is 1.00 or more and 1.30 or less.
[7] The polyphenylene sulfide film according to any one of [1] to [6], wherein a longitudinal storage elastic modulus E'_{MD90} [GPa] at 90 °C and a longitudinal storage elastic modulus E'_{MD100} [GPa] at 100 °C measured with Dynamic Mechanical Analysis (DMA) in a condition of a temperature increasing rate of 2 °C/min from 25 °C to 200 °C, a frequency of 1 Hz and a displacement of 10 µm satisfy a relation formula of $0.93 \leq E {′}_{MD 100} / E {′}_{MD 90} \leq 0.98 .$
[8] The polyphenylene sulfide film according to any one of [1] to [7], wherein a crystallization temperature Tcc measured with a Differential Scanning Calorimeter (DSC) is 136 °C or more and 155 °C or less.
[9] The polyphenylene sulfide film according to any one of [1] to [8], wherein the polyphenylene sulfide film comprises more than 98 mass% and 100 mass% or less of the polyphenylene sulfide resin among all components of 100 mass% in total constituting the polyphenylene sulfide film.
[10] The polyphenylene sulfide film according to any one of [1] to [9], wherein the polyphenylene sulfide resin has a melt flow rate of 40 g/10 min or more and 100 g/10 min or less determined at temperature of 315.6 °C and load of 5,000 g.
[11] The polyphenylene sulfide film according to any one of [1] to [10], wherein a thickness is 1 µm or more and 30 µm or less.
[12] A metalized film comprising the polyphenylene sulfide film according to any one of [1] to [11], wherein a metal layer is provided on at least one surface side of the polyphenylene sulfide film.
[13] A current collector foil comprising the polyphenylene sulfide film according to any one of [1] to [11], wherein a metal layer is provided on at least one side of the polyphenylene sulfide film.
[14] An electrode plate comprising the current collector foil according to [13], wherein an electrode material layer is formed on a surface of the current collector foil.
[15] A secondary battery comprising the electrode plate according to [14].
[16] A polyphenylene sulfide film roll having a width of 700 mm or more and being made by rolling up a film chiefly comprising a polyphenylene sulfide, of which a width directional extension rate of a film sample cut into 50 mm x 50 mm along longitudinal and width directions determined at 230 °C by a Thermo-Mechanical Analysis (TMA) is 0.0 % or more and 13.0 % or less both at points A and B while a difference between a maximum and a minimum of the extension rates in a longitudinal direction, a 45° direction, a width direction and a 135° direction determined at 150 °C by the TMA is 1.6 % or less both at points A and B, wherein the point A is 50 mm away from one edge of the roll toward a center while the point B is 50 mm away from the other edge of the roll toward the center.
[17] The polyphenylene sulfide film roll according to [16], wherein a difference between the extension rates at points A and B in the 45° direction determined at 230 °C is 1.2 % or less while a difference between the extension rates at points A and B in 135° direction determined at 230 °C is 1.2 % or less.
[18] The polyphenylene sulfide film roll according to [16] or [18], wherein a width directional extension rate variation between 150 °C and 230 °C determined by the TMA is 0.0 % or more and 8.0 % or less both at point A and point B.
[19] The polyphenylene sulfide film roll according to any one of [1] to [18], wherein a difference between a maximum and a minimum of a longitudinal tensile elastic modulus along the width direction is 5 MPa or more and 60 MPa or less, according to a measurement method as follows:
   (Measurement method) The difference between the maximum and the minimum of longitudinal tensile elastic modulus along the width direction is calculated from longitudinal tensile elastic moduli measured at 8 points along the width direction at intervals of 100 mm in 700 mm width part of which center is in a central region of film in the width direction along test length of 100 mm at tensile speed of 200 mm/min using test pieces cut into each size of 230 mm length and 10 mm width.
[20] The polyphenylene sulfide film roll according to any one of [16] to [19], wherein a film thickness is 1 µm or more and 30 µm or less.
[21] A metalized film roll comprising the polyphenylene sulfide film according to any one of [16] to [20], wherein a metal layer is provided on at least one surface side of the polyphenylene sulfide film.
[22] A current collector foil roll comprising the polyphenylene sulfide film according to any one of [16] to [20], wherein a metal layer is laminated on a surface of the polyphenylene sulfide film roll.
[23] An electrode plate roll comprising the current collector foil roll according to [22], wherein an electrode material layer is formed on a surface of the current collector foil roll.
[24] A polyphenylene sulfide film roll having a width of 700 mm or more and being made by rolling up a film chiefly comprising a polyphenylene sulfide, of which a width directional extension rate of a film sample cut into 50 mm x 50 mm along longitudinal and width directions determined at 230 °C by a Thermo-Mechanical Analysis (TMA) is 0.0 % or more and 13.0 % or less both at points A and B, wherein: a difference between extension rates at points A and B in a 45° direction determined at 230 °C is 1.2 % or less; and a difference between extension rates at points A and B in 135° direction determined at 230 °C by the TMA is 1.2 % or less.

### Effect according to the Invention

Our invention makes it possible to provide a polyphenylene sulfide film excellent in workability.

### Embodiments for carrying out the Invention

Our polyphenylene sulfide means a polymer of which repeating units of 95 mol% or more comprise the unit shown as the structural formula of Chemical formula 1. The ratio of the unit of 95 mol% or more, preferably 97 mol% or more can maintain the heat resistance, dimension stability, machine characteristic, electric insulation or the like by preventing crystallinity, softening point or the like of the polymer from deteriorating. Our polyphenylene sulfide may be copolymerized with 5 mol% or less of unit such as methaphenilene sulfide unit shown as the structural formula of Chemical formula 2, biphenylene sulfide unit, biphenylene ether sulfide unit, biphenylene sulfone sulfide unit, biphenylenecarbonyl sulfide unit and naphthalene sulfide unit.

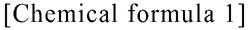

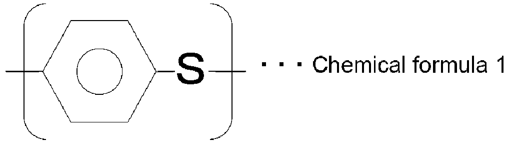

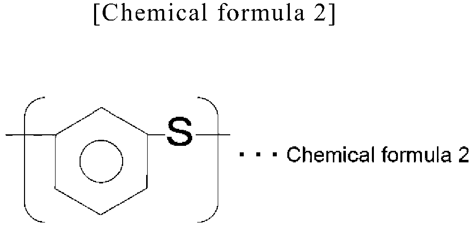

To the extent that the film extension rate is not deteriorated, it is possible that the polyphenylene sulfide contains repeating units containing sulfide bond capable of copolymerizing. The copolymerization type of the polymer may be either random or block.

It is preferable that the polyphenylene sulfide film comprises more than 98 mass% and 100 mass% or less of polyphenylene sulfide resin among all components of 100 mass% in total constituting the polyphenylene sulfide film. On the basis of a whole polyphenylene sulfide film of 100 mass%, it is preferable that resin compositions other than polyphenylene sulfide (resin composition (A)) of less than 2 mass% are contained. It is preferable that the content is less than 1 mass% including substantively zero which is more preferable. The content of less than 2 mass% of resin composition (A) can prevent quality from deteriorating by generating foreign substance modified from resin composition (A) caused by reacting the polyphenylene sulfide.

Our film chiefly comprises polyphenylene sulfide. When a film contains more than 50 mass% and 100 mass% or less of polyphenylene sulfide among 100 mass% of all components constituting the film, the film is regarded as "film chiefly comprising polyphenylene sulfide".

It is preferable that the polyphenylene sulfide resin constituting our polyphenylene sulfide film has a melt flow rate of 40 g/10 min or more and 100 g/10 min or less, when the melt flow rate is determined at temperature of 315.6 °C and load of 5,000 g. It is preferably 50 g/10 min or less, and is more preferably 80 g/10 min or less. The melt flow rate of less than 40 g/10 min might cause a high viscosity incapable of melt extrusion and biaxial orientation while the melt flow rate of more than 100 g/10 min might cause film breakage in a process of lateral extension or re-extension.

It is preferable that our polyphenylene sulfide film contains particles so that the film is enhanced in sliding performance. The particles should not be made of material deteriorating film extension rate. It is possible to use one kind of the particles alone, or alternatively two or more kinds of the particles together. Because of good dispersibility in the polyphenylene sulfide film, it is preferable to use calcium carbonate particles.

It is preferable that the particles have an average particle diameter of 0.1 µm or more and 10 µm or less. The average particle diameter of 10 µm or less, preferably of 5 µm and further preferably of 2 µm or less can prevent the film surface protrusion from getting large so that characteristics of metal layer are not inhibited in forming the metal layer. The average particle diameter of 0.1 µm or more can prevent the sliding characteristics of the film surface from deteriorating so that film quality is prevented from deteriorating by flaw generated in conveying or processing the film.

The particle diameters can be measured by observing 5,000 or more particles at various sights with a transmission electron microscope (TEMH7100 made by Hitachi, Ltd.) and analyzing images of particles with an image analyzer (QTM900 made by Cambridge Instrument) after removing polyphenylene sulfide by a plasma low-temperature ashing method with a device (PR-503 made by Yamato Scientific Co., Ltd.) from a polyphenylene sulfide film to expose the particles. Average particle diameter D can be numerically processed by the following formula. $D = ΣDi / N \left(Di: equivalent circle diameter of particle, N: the number of particles\right)$

It is preferable that the particles are contained 0.1 mass% or more and less than 2.0 mass%. It is preferably 0.2 mass% or more and 1.8 mass% or less, and is more preferably 0.3 mass% or more and 1.5 mass% or less. The content of less than 2.0 mass% can reduce film surface protrusions to form a metal layer without inhibiting characteristics of the metal layer. The content of 0.1 mass% or more can prevent film quality from deteriorating by poor sliding performance of film surface to cause flaw when the film is conveyed and processed.

Our polyphenylene sulfide film may be a single or multi-layered film. The multi-layered film may be a laminate film having two or more layers. For example, it may be a double-layered laminate film or a triple-layered laminate film to the extent that a whole laminate film exhibits characteristics of our polyphenylene sulfide film.

It is preferable that our polyphenylene sulfide film has 0.0 % or more and 13.0 % or less of width directional extension rate determined by Thermo-Mechanical Analysis (TMA) at 230 °C. It is preferably 0.0 % or more and 9.0 % or less, and is more preferably 0.0 % or more and 5.0 % or less. The width directional extension rate of 13.0 % or less can improve workability by suppressing wrinkle generation of the film caused by extending in the width direction by thermal load applied to form metal layers. Further, the width directional extension rate of 0.0 % or more can improve workability by suppressing width directional shrinkage of film with thermal load to form metal layers to generate cracks in metal layers. Specifically, the above-described range of extension rate at 230 °C can suppress film wrinkles and wrinkles or cracks of metal layers when the film is subject to high temperature and flow directional tension in such a case that metal layers are formed on a thick film by a single vapor deposition in roll-to-roll manner. Further, uneven thickness of electrode material layer formed by coating thereon can be decreased by suppressing the wrinkles and cracks of the metal layer.

To set the width directional extension rate to 0.0 % or more and 13.0 % or less, it is possible to adjust temperature and draw ratio in drawing the film laterally (in the width direction) in a film forming process. Alternatively, it is possible to adjust temperature and relaxation ratio in relaxing the film laterally (in the width direction) after heat treatment applied to the film extended laterally (in the width direction). Besides, a thin film easily relaxes the orientation in a film forming process so that the width directional extension rate tends to increase.

In our polyphenylene sulfide film, it is preferable that a difference between the maximum and the minimum of extension rates in the longitudinal direction, 45° direction, the width direction and 135° direction determined at 150 °C by the TMA is 1.6% or less. It is preferable that the difference is 1.2 % or less, preferably 0.7 % or less. The difference between the maximum and the minimum of 1.6 % or less can improve workability by improving in-plane uniformity of film dimension change so that the film extends uniformly in plane to improve thickness uniformity of the electrode material layer when the film is dried after the application process of electrode material layer.

To set the difference between the maximum and the minimum to 1.6 % or less, it is possible to adjust temperature and draw ratio when the film is relaxed and drawn laterally (in the width direction) after heat treatment is applied to the film which has been drawn longitudinally (in the longitudinal direction) and laterally (in the width direction) in a film forming process.

It is preferable that our polyphenylene sulfide film has 0.0 % or more and 8.0 % or less of the width directional extension rate variation between 150 °C and 230 °C determined by the TMA. It is preferably 0.0 % or more and 3.5 % or less. The width directional extension rate variation of 8.0 % or less can suppress wrinkle generation of the film caused by extending in the width direction by thermal load applied to form metal layers. Further, the width directional extension rate variation of 0.0 % or more can improve workability by suppressing width directional shrinkage of film with thermal load to form metal layers to generate cracks in metal layers.

In our polyphenylene sulfide film, it is preferable that a film sample cut into 50 mm x 50 mm along the longitudinal and width directions has extension rates of 0.0% or more and 9.0 % or less, in the longitudinal direction, 45° direction, the width direction and 135° direction determined at 230 °C by the TMA. It is preferably 0.0 % or more and 5.0 % or less. Each directional extension rate of 9.0 % or less can suppress wrinkle generation of the film caused by extending uniformly in plane by thermal load applied to form metal layers. Further, said each directional extension rate of 0.0 % or more can improve workability by suppressing shrinkage of film with thermal load to form metal layers to generate cracks in metal layers.

In our polyphenylene sulfide film, it is preferable that a crystallinity calculated from fusion enthalpy determined with a Differential Scanning Calorimeter (DSC) is 29 % or more and 40 % or less, preferably 30 % or more and 38 % or less. The crystallinity of less than 29 % might decrease thermal dimension stability decreases to generate wrinkles with thermal load to form metal layers so that workability deteriorates. The crystallinity of more than 40 % might deteriorate a coherency between the polyphenylene sulfide film and the metal layer to generate wrinkles so that workability deteriorates.

In our polyphenylene sulfide film, it is preferable that stress F2 of 2% extension rate and stress F5 of 5% extension rate of the film determined at room temperature 23 °C by a tensile test satisfy the following formula. $36.0 \left[MPa\right] < F 5 - F 2 \leq 54.0 \left[MPa\right]$

It is preferable to satisfy the following formula. $37.5 \left[MPa\right] \leq F 5 - F 2 \leq 45.0 \left[MPa\right]$

When the value of (F5 - F2) is more than 36.0 MPa and 54.0 MPa or less, it is possible to produce a stable rolled body which has excellent dimension stability against tensile stress in a rolling process and little misaligned winding even when the rolling process is performed at a high speed and a high stress.

To set the value of (F5 - F2) to the range of more than 36.0 MPa and 54.0 MPa or less, it is possible to adjust temperature and draw ratio when the film is drawn laterally (in the width direction) in a film forming process. Alternatively, it is possible to avoid heat treatment such as annealing treatment at a high temperature for a long time.

It is preferable that our polyphenylene sulfide film has a longitudinal F2 of 65 MPa or more and 75 MPa or less, preferably 68 MPa or more and 73 MPa or less. Further, it is preferable that the longitudinal F5 is 104 MPa or more and 120 MPa or less, preferably 108 MPa or more and 115 MPa or less.

It is preferable that our polyphenylene sulfide film has 3.00 or more and 3.30 or less of longitudinal dielectric constant ε'_{MD} measured with a molecular orientation meter. It is preferably 3.10 or more and 3.25 or less. When the dielectric constant ε'_{MD} is 3.00 or more and 3.30 or less, it is possible to produce a stable rolled body which has a strong longitudinal orientation and an excellent dimension stability against tensile stress in a rolling process and little misaligned winding even when the rolling process is performed at a high speed and a high stress. Further, it is preferable that MOR_c (Corrected Molecular Orientation Ratio) is 1.00 or more and 1.30 or less, preferably 1.00 or more and 1.10 or less. The MOR_c indicates a ratio of main orientation axis and its orthogonal axis. The lower limit is 1.00 in principle. The MOR_c has been corrected by calculating the ratio of main orientation axis and its orthogonal axis in terms of 4 µm thickness to exclude difference caused by different thicknesses so that the values can be compared uniformly. When the MOR_c is more than 1.30, the orientation might deteriorate in in-plane uniformity to deteriorate even in-plane uniformity of dimension change, so that the thickness uniformity of electrode material layer might deteriorate because the film extends non-uniformly in plane when the film is dried after coating the electrode material layer to be formed on the surface of polyphenylene sulfide film provided with metal layer.

In our polyphenylene sulfide film, it is preferable that a longitudinal storage elastic modulus E'_{MD90} [GPa] at 90 °C and a longitudinal storage elastic modulus E'_{MD100} [GPa] at 100 °C measured with Dynamic Mechanical Analysis (DMA) in a condition of temperature increasing rate of 2 °C/min from 25 °C to 200 °C, frequency of 1 Hz and displacement of 10 µm satisfy the following relation formula. $0.93 \leq E {′}_{MD 100} / E {′}_{MD 90} \leq 0.98$

It is preferable to satisfy the following formula. $0.95 \leq E {′}_{MD 100} / E {′}_{MD 90} \leq 0.97$

When the value of E'_{MD100}/E'_{MD90} is 0.93 or more and 0.98 or less, dimension change can be small even in forming a rolling electrode at a high pressure of roll pressing so that wrinkle and detachment between the metal layer and the film can be suppressed. To set the value of E'_{MD100}/E'_{MD90} to the range of 0.93 or more and 0.98 or less, it is possible to adjust temperature and draw ratio when the film is drawn laterally (in the width direction) after heat treatment is applied to the film which has been drawn longitudinally (in the longitudinal direction) and laterally (in the width direction) in a film forming process. Alternatively, it is possible to avoid heat treatment such as annealing treatment at a high temperature for a long time.

In our polyphenylene sulfide film, it is preferable that a longitudinal storage elastic modulus E'_{MD100} at 100 °C measured with the DMA in a condition of temperature increasing rate of 2 °C/min from 25 °C to 200 °C, frequency of 1 Hz and displacement of 10 µm is 5.30 GPa or more and 7.00 GPa or less, preferably 5.50 GPa or more and 6.50 GPa or less.

It is preferable that our polyphenylene sulfide film has a crystallization temperature Tcc measured with DSC of 136 °C or more and 155 °C or less, preferably 138 °C or more and 150 °C or less. When the crystallization temperature Tcc is less than 136 °C, re-drawing might be insufficient and in-plane uniformity of dimension change might deteriorate, so that the film thickness uniformity of electrode material layer might deteriorate because the film extends non-uniformly in plane when the film is dried after coating the electrode material layer to be formed on the surface of polyphenylene sulfide film provided with metal layer. When the crystallization temperature Tcc is more than 155 °C, insufficient crystallization by the heat treatment might deteriorate thermal dimension stability so that wrinkles are generated by thermal load to form metal layers to deteriorate workability.

It is preferable that our polyphenylene sulfide film has a thickness of 1 µm or more and 30 µm or less. The thickness of 1 µm or more, preferably 2 µm or more can suppress deterioration of productivity derived from film breakage in a film forming process and improve handling ability in processing. Although the upper limit of the thickness is not limited in terms of workability, it is preferable that the thickness is 15 µm or less from viewpoints of downsizing and film thinning when the film is used for dielectric of film capacitor or base material of current collector foil.

It is preferable that our polyphenylene sulfide film roll having a width of 700 mm or more and being made by rolling up a film chiefly comprising polyphenylene sulfide, of which a width directional extension rate of a film sample cut into 50 mm x 50 mm along the longitudinal and width directions determined at 230 °C by Thermo-Mechanical Analysis (TMA) is 0.0 % or more and 13.0 % or less both at points A and B while a difference between the maximum and the minimum of extension rates in the longitudinal direction, 45° direction, the width direction and 135° direction determined at 150 °C by the TMA is 1.6 % or less both at points A and B, wherein the point A is 50 mm away from one edge of the roll toward the center while the point B is 50 mm away from the other edge of the roll toward the center.

It is preferable that our polyphenylene sulfide film roll has a width of 700 mm or more, preferably 900 mm or more and further preferably 1,200 mm or more. When the polyphenylene sulfide film roll has a width of less than 700 mm, working area per unit speed might be small in forming metal layers to increase production rate. Although the upper limit of the width of the polyphenylene sulfide film roll is not limited in particular, it is generally 2,000 mm or less from a viewpoint of handling.

Although the length of the polyphenylene sulfide film roll is not limited in particular, it is generally 2,000 m or more and 20,000 m or less.

In our polyphenylene sulfide film roll, it is preferable that a width directional extension rate of a film sample cut into 50 mm x 50 mm along the longitudinal and width directions determined at 230 °C by Thermo-Mechanical Analysis (TMA) is 0.0 % or more and 13.0 % or less both at points A and B, wherein the point A is 50 mm away from one edge of the roll toward the center while the point B is 50 mm away from the other edge of the roll toward the center. It is preferable that the width directional extension rate is 0.0 % or more and 9.0 % or less, preferably 0.0 % or more and 5.0 % or less. The width directional extension rate of 13.0 % or less can improve workability by suppressing wrinkle generation of the film caused by extending in the width direction by thermal load applied to form metal layers. Further, the width directional extension rate of 0.0 % or more can improve workability by suppressing width directional shrinkage of film with thermal load to form metal layers to generate cracks in metal layers. Specifically, the above-described range of extension rate at 230 °C can suppress film wrinkles and wrinkles or cracks of metal layers when the film is subject to high temperature and flow directional tension in such a case that metal layers are formed on a thick film by a single vapor deposition in roll-to-roll manner. Further, uneven thickness of electrode material layer formed by coating thereon can be decreased by suppressing the wrinkles and cracks of the metal layer.

To set the width directional extension rate to 0.0 % or more and 13.0 % or less, it is possible to adjust temperature and draw ratio in drawing the film laterally (in the width direction) in a film forming process. Alternatively, it is possible to adjust temperature and relaxation ratio in relaxing the film laterally (in the width direction) after heat treatment applied to the film extended laterally (in the width direction).

In our polyphenylene sulfide film roll, it is preferable that a difference between the maximum and the minimum of extension rates in the longitudinal direction, 45° direction, the width direction and 135° direction determined at 150 °C by the TMA is 1.6 % or less both at the point A and the point B. It is preferably 1.2 % or less, preferably 0.7 % or less. The difference between the maximum and the minimum of 1.6 % or less can improve in-plane uniformity of film dimension change so that the film extends uniformly in plane to improve thickness uniformity of the electrode material layer when the film is dried after the application process of electrode material layer.

To set the difference between the maximum and the minimum to 1.6 % or less, it is possible to adjust temperature and draw ratio when the film is relaxed and drawn laterally (in the width direction) after heat treatment is applied to the film which has been drawn longitudinally (in the longitudinal direction) and laterally (in the width direction) in a film forming process. In addition, less than 1.5% are desirable for absolute value | RA-RB | of the difference with difference RB of the maximum and the minimum in the growth rate of longer direction at 150 degrees Celsius that I measured in TMA in difference RA of the maximum and the minimum and above point B in the growth rate of longer direction at 150 degrees Celsius that I measured in TMA in above point A, a 45 degrees direction, a width direction, the 135 degrees direction, a 45 degrees direction, a width direction, the 135 degrees direction, and less than 1.0% are more desirable for the polyphenylene sulfide film roll of this invention.

In our polyphenylene sulfide film roll, it is preferable that a difference between extension rates at points A and B in 45° direction determined at 230 °C is 1.2 % or less while a difference between extension rates at points A and B in 135° direction determined at 230 °C is 1.2 % or less. It is preferably the difference is 0.5 % or less, preferably 0.3 % or less. The difference between extension rates of 1.2 % or less can improve workability by improving in-plane uniformity of film dimension change so that the polyphenylene sulfide film roll extends similarly at one edge and the other edge to suppress meandering generated in forming metal layers in roll-to-roll manner.

To set the difference between the extension rates to 1.2 % or less, it is possible to adjust temperature and draw ratio when the film is relaxed and drawn laterally (in the width direction) after heat treatment is applied to the film which has been drawn longitudinally (in the longitudinal direction) and laterally (in the width direction) in a film forming process.

It is preferable that our polyphenylene sulfide film roll has 0.0 % or more and 8.0 % or less of the width directional extension rate variation between 150 °C and 230 °C determined both at point A and point B by the TMA. It is preferably 0.0% or more and 3.5% or less. The width directional extension rate variation of 8.0 % or less can suppress wrinkle generation of the film caused by extending in the width direction by thermal load applied to form metal layers. Further, the width directional extension rate variation of 0.0 % or more can improve workability by suppressing width directional shrinkage of film with thermal load to form metal layers to generate cracks in metal layers.

In our polyphenylene sulfide film roll, it is preferable that a difference between the maximum and the minimum of longitudinal tensile elastic modulus along the width direction is 5 MPa or more and 60 MPa or less, preferably 5 MPa or more and 30 MPa or less.

### (Measurement method)

The difference between the maximum and the minimum of longitudinal tensile elastic modulus along the width direction is calculated from longitudinal tensile elastic moduli measured at 8 points along the width direction at intervals of 100 mm in 700 mm width part of which center is in the central region of film in the width direction along test length of 100 mm at tensile speed of 200 mm/min using test pieces cut into each size of 230 mm length and 10 mm width.

The difference between the maximum and the minimum of longitudinal tensile elastic modulus along the film width direction of 5 MPa or more and 60 MPa or less can improve workability by the polyphenylene sulfide film roll extending uniformly along the width direction to suppress meandering generated in forming metal layers in roll-to-roll manner.

### (Manufacturing method of film)

It is preferable to perform the following process to produce our polyphenylene sulfide film and polyphenylene sulfide film roll.

Hereinafter, the production method of the polyphenylene sulfide will be explained. The polyphenylene sulfide can be made by polymerizing alkali metal sulfide (alkali sulfide) and dihalobenzene.

The alkali metal sulfide may be lithium sulfide, sodium sulfide, potassium sulfide, rubidium sulfide, cesium sulfide, sodium sulfide or the like. It is preferable to employ sodium sulfide. The alkali metal sulfide can be used as hydrate, aqueous mixture or anhydride. It is possible to use alkali metal sulfide prepared in situ in reaction system or alternatively to use alkali metal sulfide prepared from sulfide, hydrogen sulfide and alkali metal hydrate such as lithium hydroxide and sodium hydroxide. It is possible to use only one kind of the alkali metal sulfide, or alternatively to use two or more kinds thereof at the same time.

The dihalobenzene may be p-dihalobenzene such as p-dichlorobenzene and p-dibromobenzene, m-dihalobenzene such as m-dichlorobenzene, dihalobenzene which contains substituent other than halogen atoms, such as 1-methoxy-2,5-dihalobenzene and 3,5-dichloro benzoic acid or the like. Above all, it is preferable to employ p-dihalobenzene, preferably p-dichlorobenzene. It is possible to use only one kind of the dihalobenzene, or alternatively to use two kinds thereof at the same time.

To obtain high molecular weight of polyphenylene sulfide, it is preferable that the usage (prepared amount) of the dihalobenzene is 0.9 to 2.0 mol per mol of the prepared amount of the alkali metal sulfide. It is preferably 1.0 to 1.3 mol. The usage of the range can easily obtain the polyphenylene sulfide having a high viscosity (high degree of polymerization) suitable for processing.

To form terminals or adjust the polymerization reaction and molecular weight in producing the polyphenylene sulfide, it is possible to use monohalide (aromatic compound or the like) together with the dihalobenzene. Further, to form branched or cross-linked polymer, it is also possible to use polyhalide of trihalide or more halogen compound (aromatic compound or the like) such as 1,2,4-trichlorobenzene and 1,3,5-trichlorobenzene, active hydrogen-containing halogen aromatic compound, halogen nitroaromatic compound or the like.

To produce the polyphenylene sulfide, it is preferable that a polymerization aid is added for reaction to adjust a polymerization degree. The polymerization aid may be a polymerization aid generally used for polyphenylene sulfide, such as alkali metal hydroxide (caustic alkali), alkali metal carboxylate, alkali metal carbonate, alkaline earth metal hydroxide and alkaline earth metal carbonate. Above all, it is preferable to use alkali metal hydroxide or alkali metal carboxylate.

The alkali metal hydroxide may be sodium hydroxide, potassium hydroxide, lithium hydroxide or the like.

The alkali metal carboxylate may be lithium acetate, sodium acetate, potassium acetate, sodium propionate, lithium valerate, sodium benzoate, sodium phenylacetate, potassium p-toluate or the like. Above all, it is preferable to employ sodium acetate because of its low price and accessibility. It is possible to use an anhydride, a hydrate or a water solution of the alkali metal carboxylate.

It is also possible that the alkali metal carboxylate is formed for reaction in a solvent by adding one or more kinds of compound selected from the group consisting of alkali metal hydroxide, alkali metal carbonate and alkali metal bicarbonate by approximately the same chemical equivalence to an organic acid.

One kind of the polymerization aid can be used alone or alternatively two kinds or more thereof can be used together.

The usage amount of the polymerization aid can be designed flexibly depending on kinds of the polymerization aid, alkali metal sulfide, dihalobenzene or the like. It is preferable to use 0.01 to 5 mol, preferably 0.1 to 2 mol, per 1 mol preparation of the alkali metal sulfide.

It is preferable that the solvent is a polar solvent such as organic amide solvent. From a viewpoint of stable reaction, it is preferable that the organic amide solvent is an N-alkyl pyrrolidone such as N-methyl-2-pyrrolidone and N-ethyl-2-pyrrolidone, a caprolactam such as N-methyl-ε-caprolactam or an amide-based high boiling point aprotic polar solvent such as 1,3-dialkyl-2-imidazolidinone, tetraalkyl urea and hexaalkyl triamide phosphate. Above all, N-methyl-2-pyrrolidone (hereinafter, it may be abbreviated as NMP) is suitably used.

It is preferable that the solvent of 0.2 to 10 mol is used per 1 mol preparation of the alkali metal sulfide, preferably 2 to 5 mol.
(1) The polyphenylene sulfide can be produced by adding appropriate amounts of the alkali metal sulfide and the dihalobenzene together with appropriate amounts of the polymerization aid and a halide other than the dihalobenzene as needed, for reaction under high temperature and high pressure in the polar solvent such as the amide-based high boiling point solvent.

The pressure in the polymerization system can be decided depending on the kind and amount of the aid as well as desirable polymerization degree or the like. Further, the temperature and the polymerization time can be decided depending on the kind and amount of the aid as well as desirable polymerization degree or the like. It is preferable that the polymerization time is 20 min to 50 hours at temperature of 200 to 300 °C, preferably 1 to 10 hours at temperature of 230 to 280 °C.

Thus powder or granule of polyphenylene sulfide can be prepared. Then, the prepared powder or granule of polyphenylene sulfide is rinsed with water or/and solvent to remove by-product salt, polymerization aid, unreacted monomer and the like.

(2) When a resin (resin composition (A)) other than polyphenylene sulfide or particles are added to our polyphenylene sulfide film as described above, resin composition (A) or the particles are added to the powder or granule of the polyphenylene sulfide to be mixed uniformly by Henshel mixer. It is possible to add additives such as an antioxidant, thermostabilizer, lubricant and ultraviolet absorbent similarly to polyphenylene sulfide.

Next, the obtained mixture is fed to an extruder preferably having one or more stages of vent to be extruded through dies after being melt and kneaded at 290 to 360 °C to obtain polyphenylene sulfide resin composition. It is also possible that the mixture is melt and formed in a gut shape to be cut into a length of 2 to 10 mm of pellets of polyphenylene sulfide resin composition. The obtained polyphenylene sulfide resin composition is dried with a heating dryer under vacuum in a condition of 100 to 180 °C for 1 to 5 hours.

When neither resin composition (A) nor the particles are added, an additive such as antioxidant, thermostabilizer, lubricant and ultraviolet absorbent can be mixed with the polyphenylene sulfide obtained in item (1) as needed, so that the mixture is extruded or melted to form polyphenylene sulfide resin composition in the same manner as the mixture of resin composition (A) and the particles.

One kind of the polyphenylene sulfide resin compound can be used or alternatively two kinds or more thereof can be used together. For example, it is possible to use a mixture of a polyphenylene sulfide resin pellet (hereinafter, it may be called as master pellet) added with resin composition (A) and another polyphenylene sulfide resin pellet (hereinafter, it may be called as base pellet) added with no resin composition (A) and the particles.

(3) From the polyphenylene sulfide resin pellet obtained in item (2), our polyphenylene sulfide film is produced. The polyphenylene sulfide resin pellet obtained in item (2) is stirred with a mixer under reduced pressure as heated to a temperature of 120 to 230 ° for 3 hours or more, preferably at vacuum degree of 0 to 50 mmHg at 160 to 200 °C for 5 to 10 hours. When the pressure is insufficiently reduced, polyphenylene sulfide resins might be bridged with oxygen to generate modified polymer. The drying process at more than 230 °C might harden dry material to cause a problem in forming films while the drying process at less than 120 °C might leave impurities, such as high boiling point compound volatile around 250 °C, remaining in the material of polyphenylene sulfide to cause defects of films.

The polyphenylene sulfide resin composition may be dried in multiple stages by drying again after drying it as described above and cooling it down to room temperature.

From the dried polyphenylene sulfide resin composition, a single or multi-layered polyphenylene sulfide film can be produced. The multi-layered film can be produced by a method such as coating, laminating and coextruding. Above all, it is preferable to employ the coextruding lamination from a viewpoint of controlling thickness of each layer constituting our polyphenylene sulfide film.

It is preferable to form our polyphenylene sulfide film as follows. First, the polyphenylene sulfide resin composition is fed to a melt extruder to be heated and melted at the melting point or a higher temperature, preferably 290 to 360 °C. Second, the melt extruded through slit-shaped dies is quenched by a method such as cold solidification (casting) on a rotating metal drum named casting roll to prepare an unstretched film. Here, it is preferable to provide a gear pump, a static mixer or a filter device in the flow path of polymer.

The obtained unstretched film can be stretched to prepare a stretched film by a method such as sequential biaxial orientation method in which the film is stretched with a group of rolls and a tenter sequentially in the film longitudinal direction (Machine Direction) and film width direction (Transverse Direction) and simultaneous biaxial orientation method in which the film is stretched simultaneously in the film longitudinal direction and the film width direction. The orientation method is preferably a sequential biaxial orientation method.

The sequential biaxial orientation method can be performed in a stretching condition flexibly designed depending on the polyphenylene sulfide of the polyphenylene sulfide resin composition or the kind and presence of other resins, additives or the like. It is preferable that the stretching condition includes a temperature of 80 to 120 °C, a longitudinal (MD) draw ratio of 3.3 to 5.0 times and a width (TD) draw ratio of 2.5 to 4.5 times. The stretching condition preferably includes the temperature of 90 to 110 °C, the longitudinal (MD) draw ratio of 3.5 to 4.4 times and the width (TD) draw ratio of 3.0 to 4.0 times. It is preferable that the rate of the width (TD) draw ratio to the longitudinal (MD) draw ratio is 0.8 or more and 1.4 or less, preferably 1.0 or more and 1.2 or less.

It is preferable that the film is heated during the longitudinal stretching by a radiation heater together in addition to the heat conduction from the conveyance roll to adjust temperatures on both film sides in an appropriate range so that molecular orientation of the polyphenylene sulfide is controlled properly.

It is preferable that the obtained stretched film is further subject to heat treatment. The heat treatment condition can be designed flexibly depending on the polyphenylene sulfide of the polyphenylene sulfide resin composition or the kind and presence of other resins, additives or the like. From viewpoints of heat resistance, mechanical property and thermal dimensional stability, it is preferable that the heat treatment condition includes a temperature of 180 °C or more and polyphenylene sulfide resin composition melting point or less, or length of regulated shrinkage of 15 % or less, and time of 1 to 60 sec. The temperature is preferably 200 °C or more and polyphenylene sulfide composition melting point - 5 °C or less. To improve the film in thermal dimension stability, the film can be relaxed in one or two directions. It is preferable that the film is relaxed by 3.0 % or more and 9.0 % or less in the film width direction so that the dimension change tends to be reduced to easily adjust the width directional extension rate measured by TMA at 230 °C within a desirable range. It is preferable to relax it by 5.5 % or more and 8.0 % or less in the film width direction. To adjust the width directional extension rate within a desirable range, it is preferable to relax it at 220 °C or more and polyphenylene sulfide resin composition melting point or less. The relaxation temperature is preferably 250 °C or more and polyphenylene sulfide resin composition melting point - 10 °C or less. To improve in-plane uniformity of dimension change, it is preferable that the relaxed film is re-stretched in the width direction (laterally). It is preferable that the re-stretching draw rate is 0.2 % or more and 7.0 % or less, preferably 1.0 % or more and 3.5 % or less. The re-stretching draw rate of less than 0.2 % might not improve the in-plane uniformity of dimension change while the re-stretching draw rate of more than 7.0 % might deteriorate productivity because of film breakage. To adjust the difference between the maximum and the minimum of extension rates in the longitudinal direction, 45° direction, the width direction and 135° direction determined at 150 °C by the TMA in a desirable range, it is preferable that the re-stretching temperature is the crystallization temperature Tcc [°C] of the polyphenylene sulfide resin composition + 30 °C or more and the crystallization temperature Tcc [°C] of the polyphenylene sulfide resin composition + 90 °C or less. The re-stretching temperature is preferably Tcc [°C] + 40 °C or more and Tcc [°C] + 80 °C or less.

After the re-stretched polyphenylene sulfide film is cooled in a conveyance process, the edge is cut and rolled up to prepare an intermediate product. The obtained intermediate product is slit into a desirable width and length in a slitting process and is rolled up to prepare our polyphenylene sulfide film roll.

It is possible that our polyphenylene sulfide film is subject to a corona discharge processing or plasma processing to give a stronger interface adhesiveness to metal layers. Atmosphere gas at the time of the corona discharge processing may be at least one kind of gas selected from air (EC processing), oxygen (OE processing), nitrogen (NE processing) and carbon dioxide (CE processing). Above all, it is preferable to employ a surface treatment of the EC processing from a viewpoint of economy. Although the surface processing may be performed in either a film forming process of the polyphenylene sulfide film or another process, it is preferable to perform it in the film forming process from a viewpoint of economy.

It is preferable that the polyphenylene sulfide film is provided with a metal layer on at least one surface side to make a metalized film since our polyphenylene sulfide film is excellent in workability at the time of vapor deposition or metal layer lamination. The metalized film can be used for capacitors or circuit base material as well as current collector foils since our polyphenylene sulfide film can be thinned maintaining its excellent workability. The metalized film is provided with a metal layer on at least one surface side made by one or a plurality of metals selected from copper, copper alloy, aluminum, aluminum alloy, nickel, nickel alloy, titanium, titanium alloy, silver, silver and alloy. When the current collector foil is used for lithium-ion batteries, it is preferable that a cathode current collector foil has a metal layer made of aluminum and an anode current collector foil has another metal layer made of copper. When the current collector foil is used for sodium-ion batteries, it is preferable that a cathode current collector foil has a metal layer made of aluminum and an anode current collector foil has another metal layer made of copper or aluminium. To form the metal layer, it is preferable to employ a method such as vacuum deposition method, sputtering method, electrolytic plating method, electroless plating method, or combinations thereof.

An electrode plate can be made by forming an electrode material layer on at least one surface side of our metalized film. When the electrode material is used for cathodes of lithium-ion batteries, the cathode can be made of a lithium-containing metallic oxide such as lithium cobaltate, lithium manganate and lithium nickelate, or alternatively made of a lithium-containing metallic phosphate such as lithium iron phosphate and lithium manganese iron phosphate. When the electrode material is used for cathodes of sodium-ion batteries, the cathode can be made of a sodium-containing metallic oxide or a sodium-containing metallic phosphate. The active material may be sodium-containing Prussian blue analog or the like. The conductive material may be acetylene black, Ketjen black, carbon nanotube and graphene while the binder may be polyvinylidene fluoride or the like. When the electrode material is used for anodes of batteries, the anode can be made of a carbon material such as graphite, carbon black, acetylene black, hard carbon, soft carbon, carbon nanotube and graphene while the binder may be a lithium alloy material such as tin and silicon. The active material may be lithium titanate or metal lithium while the binder may be carboxymethylcellulose, styrene butadiene copolymer, polyvinylidene fluoride or the like.

To prepare an electrode, an electrode application liquid made by dispersing active material and conductive aid in a binder resin solution is coated on a metal foil or a metalized film and then solvent is dried to prepare anode and cathode. It is preferable that the dry coated film has a film thickness of 30 µm or more and 500 µm or less. It is preferable that the active material layer formed on the metallized film is extended by applying pressure according to a roll-press method so that the active material layer is densified. The active material layer can be further densified by heating the roll in a rolling process. Our metalized film excellent in dimension stability at a high temperature can improve productivity since an electrode can maintain its surface flatness even at a high temperature in drying a solvent. When the film has longitudinal storage elastic modulus E'_{MD90} at 90 °C and longitudinal storage elastic modulus E'_{MD100} at 100 °C which satisfy the formula of 0.93 ≤ E'_{MD100}/E'_{MD90} ≤ 0.98, detachment from the metal layer and wrinkle generation of the film can be suppressed by a small dimension change even at a high pressure in the roll-press method.

With thus prepared cathode and anode, a secondary battery can be produced from a laminate or a rolled body, which is sealed in an external material such as metallic can and aluminum laminate film, the laminate being made by stacking a plurality of electrodes in which a separator for lithium secondary batteries is placed between the cathode and the anode to contact the active material layers of the electrodes, the rolled body being made by rolling a stack of the cathode, the separator and the anode. Our metalized film, having stress F2 at extension rate of 2 % and stress F5 at extension rate of 5 % under room temperature of 23 °C satisfying the formula of 36 [MPa] < F5 - F2 ≤ 54 [MPa] in the longitudinal direction, can constitute a stable rolled body which is excellent in dimension stability against tensile stress in a rolling process and little misaligned winding even when the rolling process is performed at a high speed and a high stress.

Thus produced polyphenylene sulfide film roll can be rolled back to take up layers necessary to make a metalized film roll, current collector foil roll or an electrode plate roll.

Our polyphenylene sulfide film can be used for various industrial purposes and is specifically suitable for current collector foils because of its characteristics such as heat resistance and chemical resistance. Further, it is suitable for a purpose to provide a metal layer having a thickness of 1 µm or more and 10 µm or less in one vapor deposition on at least one surface side in the roll-to-roll manner because wrinkle generation of film can be suppressed even when tension is applied to the film being subject to a high temperature. Furthermore, it is suitable for a purpose to provide an electrode material layer on a metal layer at 150 °C or less because of its small unevenness around 150 °C.

### [Examples]

### [Measurement method]

### (1) Thickness

The film is sliced with a microtome (electric microtome ST-201 made by Japan microtome research laboratory) into a piece of which cross section to be observed with a transmission microscope to measure a thickness [µm].

### (2) Thermo-Mechanical Analysis (TMA)

The film roll is cut into square pieces of 50 mm x 50 mm in the longitudinal and the width direction around points A and B respectively, point A is 50 mm inner from an edge while point B is 50 mm inner from the other edge of the polyphenylene sulfide film roll. Measurement samples of measurement length 20 mm x width 5 mm are cut out of the square pieces.

The measurement samples are subject to a measurement with a thermo-mechanical analyzer (TM-9300) made by ULVAC-RIKO, Inc. in the following condition. Each data is sampled at every 1 °C to calculate extension rate [%]. Four measurement directions are longitudinal direction, 45° direction, width direction and 135° direction, when the 45° direction is a direction which has been rotated clockwise by angle of 45° from the longitudinal direction while the 135° direction is a direction which has been rotated anticlockwise by angle of 45° from the longitudinal direction. The measurement is performed three times (N=3) per each of four directions at points A and B. The maximum of the measured value is employed to represent extension rate [%] in the longitudinal direction, 45° direction, the width direction and 135° direction.
Measurement temperature range: from 30 °C to 250 °C
Temperature increasing rate: 10 °C/min
Measurement load: 10 g
Measurement room environment: Temperature 23 °C; relative humidity 65 %; and air pressure

### (3) Differential Scanning Calorimeter (DSC)

The film roll is cut into square pieces of 50 mm x 50 mm in the longitudinal and the width direction around points A and B respectively, point A is 50 mm inner from an edge while point B is 50 mm inner from the other edge of the polyphenylene sulfide film roll.

Measurement samples of 5 mg cut out of the square pieces are weighed on a sample pan and are subject to a measurement with a differential scanning calorimeter (DSCQ100 made by TA Instruments) as heated in a condition of temperature increasing rate from 25 °C to 350 °C. The crystallinity is calculated by the following formula with crystal fusion enthalpy (ΔHm) and cold crystallization enthalpy (ΔHc) from a differential scanning calorimetry chart provided. $Crystallinity \left[%\right] = \left(ΔHm-ΔHc\right) / ΔHm 0 \times 100$

The fusion enthalpy of fully crystalline polyphenylene sulfide of 146.44 J/g disclosed in a document (Maemura E., Cakmak M., White J. L., Polym. Eng. Sci, 29, 140 (1989).) is selected as ΔHm0.

The crystallization temperature Tcc is determined as a peak temperature of exothermic peak by crystallization from glass state of a sample obtained by re-heating the sample at temperature increasing rate of 20 °C/min from 25 °C to 350 °C, after the sample is heated at temperature increasing rate of 20 °C/min from 25 °C to 350 °C to be kept for 5 min and then quenched in liquid nitrogen for 5 min.

The crystallinity and the crystallization temperature Tcc of polyphenylene sulfide film roll are determined from average values at point A and point B.

### (4) Tensile test

The film roll is cut into square pieces of 250 mm x 250 mm in the longitudinal and the width direction around points A and B respectively, point A is 50 mm inner from an edge while point B is 50 mm inner from the other edge of the polyphenylene sulfide film roll. Measurement samples of length 230 mm x width 10 mm are cut out of the square pieces.

According to JIS-C2151 (2019), stress (F2) of at extension rate of 2 % and stress (F5) at extension rate of 5 % are measured with "TENSILON" (registered trademark) UCT-100 made by Orientec Corporation under the atmosphere of room temperature 23 °C and relative humidity 65 %. Specifically, stress (F2) at extension rate of 2 % and stress (F5) at extension rate of 5 % are determined from average values of 5 times of tests performed with a strip sample of length 230 mm x width 10 mm at test length of 100 mm and tensile speed of 200 mm/min. The average values are calculated from values measured at point A and point B of polyphenylene sulfide film roll for both stress (F2) at extension rate of 2 % and stress (F5) of extension rate of 5 %.

The tensile elastic modulus is calculated from the maximum elasticity (primary formula of tangent line of the maximum slope of SS curve) just before deforming in a tensile test performed at intervals of 100 mm in 700 mm width part of which center is in the central region of film in the width direction along test length of 100 mm at tensile speed of 200 mm/min using each test pieces cut into size of 230 mm length and 10 mm width. Similarly, the difference between the maximum and the minimum of longitudinal tensile elastic modulus along the width direction is calculated from longitudinal tensile elastic moduli measured at 8 points along the width direction.

### (5) Molecular Orientation Analyzer

Samples are cut into 40 mm x 40 mm along the longitudinal and width directions at points A and B, wherein the point A is 50 mm away from one edge of the polyphenylene sulfide film roll toward the center while the point B is 50 mm away from the other edge of the roll toward the center.

The estimation is performed at frequency of 15 GHz with a microwave transmission molecular orientation analyzer MOA-6015 (made by Oji Scientific Instruments Co., Ltd.). Longitudinal dielectric constant ε'_{MD} and MOR (Molecular Orientation Ratio) are determined in the measurement device 0° direction of longitudinal direction. MOR_c (Corrected Molecular Orientation Ratio) is calculated by the following formula from the determined MOR. $MOR_c = \left(MOR-1\right) \times tc / t + 1$

Here, t indicates a sample thickness [µm], tc indicates a standard thickness (4µm) to be corrected, MOR indicates a ratio of major axis to minor axis of polar coordinates (orientation pattern) determined as described above and MOR_c indicates a corrected MOR.

ε'_{MD} is an average of values determined at point A and point B of polyphenylene sulfide film roll while MOR_c is the maximum of values determined at point A and point B.

### (6) Dynamic Mechanical Analysis (DMA)

Samples are cut into 50 mm x 50 mm along the longitudinal and width directions at points A and B, wherein the point A is 50 mm away from one edge of the polyphenylene sulfide film roll toward the center while the point B is 50 mm away from the other edge of the roll toward the center. Measurement samples of length 20 mm x width 10 mm are cut out of the square pieces.

Both ends of the obtained strip sample are set to a chuck by chuck distance of 10 mm for measurement. Storage elastic modulus E'_{MD90} at 90 °C and storage elastic modulus E'_{MD100} at 100 °C are measured by reading storage elastic modulus at each temperature reached in increasing a temperature. The average values are calculated from values measured at point A and point B of polyphenylene sulfide film roll for both E'_{MD90} and E'_{MD100}.
Device: EXSTAR DMS6100 (made by Seiko Instruments Inc.)
Measurement mode: Tensile measurement
Temperature range: from 25 °C to 200 °C
Temperature increasing rate: 2 °C/min
Measurement atmosphere: air
Frequency: 1 Hz
Displacement: 10.0 µm

### (7) Wrinkle generation in forming metal layer by vapor deposition

With 20 of our polyphenylene sulfide film rolls produced as described later, each polyphenylene sulfide film roll provided with copper layer having 1.0 µm thickness made by vacuum vapor deposition of high frequency dielectric heating type under a condition of 50 °C of chill roll temperature and a proper conveyance temperature is rolled up at tension of 35 N/m. The roll with no wrinkle generation by thermal dimension change in a vapor deposition process is regarded as "Good" while the roll with wrinkle generation is regarded as "NG". The estimation is performed according to the following standard based on the number of "Good" rolls among 20 pieces. The wrinkle generation of roll is determined when a wrinkle of 0.5 mm or more width and 20 cm or more length is visually observed on a roll-shaped surface during the conveyance process or after being rolled up.
A: 20 good rolls 20 in total 20 rolls
B: 19 good rolls and 1 NG roll in total 20 rolls
C: 16 or more and 18 or less of good rolls and 2 or more and 4 or less of NG rolls in total 20 rolls
D: 15 or less of good rolls and 5 or more of NG rolls in total 20 rolls

### (8) Rolling-up performance in forming metal layer by vapor deposition

Our polyphenylene sulfide film roll produced by the method described later is rolled up after vacuum vapor deposition in the same manner as item (7). The estimation is performed according to the following standard based on misaligned winding generated by meandering after thermal dimension change during vacuum vapor deposition on the edge face of our polyphenylene sulfide film roll.
A: less than 2 mm of misaligned winding on edge face of film
B: 2 mm or more and less than 5 mm of misaligned winding on edge face of film
C: 5 mm or more and less than 10 mm of misaligned winding on edge face of film
D: 10 mm or more of misaligned winding on edge face of film

### (9) Workability in forming electrode material layer

A metal layer is formed on our polyphenylene sulfide film roll produced by the method described later in the same manner as item (7). An electrode material layer is formed on the surface of the metal layer of the polyphenylene sulfide film roll regarded as "Good" after coating a slurry of solid content concentration of 50 mass% consisting of 97.5/1.0/1.5 mass rate of mixture made of an electrode material of graphite, a viscosity improver of sodium carboxymethylcellulose and an adhesive of styrene-butadiene rubber emulsion sufficiently stirred in deionized water in the roll-to-roll manner so that the electrode material layer has dry thickness of 50 µm. Samples are cut into 20 mm x 20 mm along the longitudinal and width directions at 20 points which are equally spaced along the width direction between positions of 10 mm away from one edge and the other edge of the electrode material layer formed. The samples are observed to measure thicknesses [µm] in the same manner as item (1) so that the difference between the maximum and the minimum of thicknesses measured at 20 points along the width direction is evaluated by the following standard.
A: less than 1.2 µm of difference between the maximum and the minimum in 20 points along the width direction
B: 1.2 µm or more and less than 2.5 µm of difference between the maximum and the minimum in 20 points along the width direction
C: 2.5 µm or more and less than 5.0 µm of difference between the maximum and the minimum in 20 points along the width direction
D: 5.0 µm or more of difference between maximum and the minimum in 20 points along the width direction

### (10) Detachment and wrinkle generation in forming rolling electrode

An electrode material layer is formed on our polyphenylene sulfide film roll produced by the method described later in the same manner as items (7) and (9). An electrode regarded as "Good" is subject to a roll press in the roll-to-roll manner to form a rolling electrode so that the electrode layer has thickness of 35 µm. Samples are cut into 500 mm length at 20 points from the rolling electrode. The estimation of detachment of electrode material layer and metal layer and wrinkle generation of the samples is performed by the following standard.
A: less than 1 of detachment and wrinkle in 20 pieces
B: less than 3 of detachment and wrinkle in 20 pieces
C: 3 or more of detachment and wrinkle in 20 pieces

### (11) Rolling-up performance in forming rolled body

A rolling electrode is formed on our polyphenylene sulfide film roll produced by the method described later in the same manner as items (7), (9) and (10). An electrode regarded as "Good" is subject to sampling of 20 rolled bodies. Misalignment between cathode and anode in the short direction is estimated by the following standard.
A: 18 or more in 20 pieces of rolled bodies have 2 mm or less of misalignment between cathode and anode in the short direction
B: 15 or more and less than 18 in 20 pieces of rolled bodies have 2 mm or less of misalignment between cathode and anode in the short direction
C: less than 15 in 20 pieces of rolled bodies have 2 mm or less of misalignment between cathode and anode in the short direction

### [Production of resin powder and pellet]

### (Production of polyphenylene sulfide powder)

Sodium hydrosulfide of 48 mass% concentration water solution of 8.181 kg (70.00 mol), purity 96 % of sodium hydroxide of 2.943 kg (70.63 mol), N-methyl-2-pyrrolidone (NMP) of 11.45 kg (115.5 mol), sodium acetic anhydride of 2.239 kg (27.30 mol) and ion-exchanged water of 4.900 kg (272.2 mol) were mixed in an autoclave of 70 L provided with agitation mixer to be heated up to 240 °C gradually for approximately 3 hours at ordinary pressure under a nitrogen purge. Water of 9.12 kg and NMP of 0.14 kg were distilled and the reaction container was cooled down to 160 °C. The agitation speed was 240 round per minutes (240 rpm).

The total amount of the residual water in the system per unit mol of prepared alkali metal sulfide and water consumed for hydrolysis of NMP was 72.0 mol. Further, hydrogen sulfide of 0.020 mol per unit mol of prepared alkali metal sulfide was scattered out of the reaction system.

Next, 10.29 kg (69.97 mol) of p-dichlorobenzene (p-DCB) and NMP of 9.090 kg (91.70 mol) were added to the reaction system. The reaction container sealed under nitrogen gas was agitated at 400 rpm and heated by temperature increasing rate of 0.8 °C/min from 200 °C to 227 °C, and was further heated by temperature increasing rate of 0.6 °C/min from 227 °C to 270 °C to be kept at 270 °C for 140 minutes.

Next, ion-exchanged water of 2.346 kg (130.3 mol) was added to the system continuously for 150 minutes to be cooled down to 250 °C gradually. Next, the reaction system was cooled gradually by temperature decreasing rate of 1.0 °C/min from 250 °C to 200 °C, and was quenched down to around the room temperature.

The obtained polyphenylene sulfide of 1 kg theoretical amount was rinsed with N-methyl-2-pyrrolidone solvent of 15 kg (bath ratio 1/15) at 90 °C for 1.5 hours to be filtrated. The obtained cake was rinsed twice with ion-exchanged water (bath ratio 1/15) at 70 °C for 1.5 hours to be filtrated. Next, it was rinsed with ion-exchanged water (bath ratio 1/15) containing 1 mass% of calcium acetate at 70 °C for 1.5 hours to be filtrated, and again, it was rinsed twice with ion-exchanged water (bath ratio 1/15) at 70 °C for 1.5 hours.

The obtained polymer was dried at 150 °C under vacuum for 4 days to prepare polyphenylene sulfide powder having melting point of 285 °C and crystallization temperature Tcc of 140 °C.

The melt flow rate was determined according to JIS-K7210 (1999) with Melt Flow Indexer made by Toyo Seiki Seisaku-sho, Ltd. at 315.6 °C and load of 5,000 g using an orifice having hole diameter of 2.095 mm and 8.00 mm of length. One minute after the sample of approximately 7 g was fed to the device, a piston was inserted and further 4 minutes later a load was applied to the piston to flow the polymer. The melt flow rate calculated from the weight of the polymer flowing out per unit time was 70 g/10 min.

### (Preparation of particle master pellet)

Calcium carbonate particles having average particle diameter of 1.0 µm were dispersed by 50 mass% in ethylene glycol to prepare a slurry. The particles collected by filtrating the slurry were mixed with the above-described polyphenylene sulfide powder by 7.0 mass% of calcium carbonate content. The obtained mixture was melt extruded to prepare particle pellet of particle content of 7.0 mass%. Hereinafter, this will be called PPS resin A.

### (Preparation of pellet without particle)

The polyphenylene sulfide powder polymer was separately melt extruded to prepare base pellet of polyphenylene sulfide resin. Hereinafter, this will be called PPS resin B.

### [Example 1]

After calcium carbonate was mixed with PPS resin A and PPS resin B by calcium carbonate content of 1.0 mass% to total resin amount, the mixture was dried with a rotary vacuum dryer under reduced pressure of 3 mmHg at 180 °C for 4 hours.

The dried pellet was fed to a single-screw extruder and was melt at 310 °C to be extruded into a sheet shape from T die. Next, the sheet-shaped material which had been wound around a casting drum of surface temperature 25 °C by static electricity applied casting method was cooled to be solidified to prepare an unstretched film.

Both film faces of the prepared unstretched film were heated to 100 °C by the sequential biaxial orientation method with a heating conveyance roll and a radiation heater so that the film was extended by 3.7 times in the longitudinal direction and was further extended by 3.4 times in the width direction at 100 °C through a tenter. The film was heat-treated at 265 °C in a heat-treating room provided downstream of the tenter used for extending the film further in the width direction, and was subject to a relaxation process at 260 °C under regulated shrinkage of 7.5 %. The relaxed film was re-stretched at 200 °C by 1.5 % in the width direction in a cooling room provided downstream of the heat-treating room and was rolled up on a core to prepare a polyphenylene sulfide film intermediate product having 4 µm thickness and 2,500 mm width. The intermediate product was slit to produce a film roll as shown in Tables.

### [Examples 2 and 3]

Film rolls were produced by the same method as Example 1, except that the films were slit as shown in Tables.

### [Example 4]

A film roll was produced by the same method as Example 2 in which a polyphenylene sulfide film prepared was slit, except for 4.0 % draw ratio in re-stretching.

### [Example 5]

A film roll was produced by the same method as Example 2 in which a polyphenylene sulfide film prepared was slit, except for 0.5 % draw ratio in re-stretching.

### [Example 6]

A film roll was produced by the same method as Example 2 in which a polyphenylene sulfide film prepared was slit, except for 5.0 % relaxation ratio.

### [Example 7]

A film roll was produced by the same method as Example 2 in which a polyphenylene sulfide film prepared was slit, except for 8.5 % relaxation ratio.

### [Example 8]

A film roll was produced by the same method as Example 2 in which a polyphenylene sulfide film prepared was slit, except for 240 °C re-stretching temperature.

### [Example 9]

A film roll was produced by the same method as Example 2 in which a polyphenylene sulfide film prepared was slit, except for 160 °C re-stretching temperature.

### [Example 10]

A film roll was produced by the same method as Example 2 in which a polyphenylene sulfide film prepared was slit, except for 240 °C relaxation temperature.

### [Example 11]

A film roll was produced by the same method as Example 2 in which a polyphenylene sulfide film prepared was slit, except for 3.4 times of longitudinal draw ratio and 3.7 times of lateral draw ratio.

### [Example 12]

A film roll was produced by the same method as Example 2 in which a polyphenylene sulfide film prepared was slit, except for 2 µm thickness adjusted by extruded amount.

### [Example 13]

A film roll was produced by the same method as Example 2 in which a polyphenylene sulfide film prepared was slit, except for 9 µm thickness adjusted by extruded amount.

### [Example 14]

A film roll was produced by the same method as Example 2 in which a polyphenylene sulfide film prepared was slit, except for 12 µm thickness adjusted by extruded amount.

### [Example 15]

A film roll was produced by the same method as Example 2 in which a polyphenylene sulfide film prepared was slit, except for 25 µm thickness adjusted by extruded amount.

### [Comparative example 1]

A film roll was produced by the same method as Example 2 in which a polyphenylene sulfide film prepared was slit, except that the relaxed film was not stretched.

### [Comparative example 2]

Although a polyphenylene sulfide film was prepared by the same method as Example 2 except for 7.5 % draw ratio in re-stretching, film breakage made it impossible to produce a film roll.

### [Comparative example 3]

A film roll was produced by the same method as Example 2 in which a polyphenylene sulfide film prepared was slit, except for 1.5 % relaxation ratio.

### [Comparative example 4]

A film roll was produced by the same method as Example 2 in which a polyphenylene sulfide film prepared was slit, except for 9.5 % relaxation ratio.

### [Comparative example 5]

A film roll was produced by the same method as Example 2 in which a polyphenylene sulfide film prepared was slit, except for 260 °C re-stretching temperature.

### [Comparative example 6]

A film roll was produced by the same method as Example 2 in which a polyphenylene sulfide film prepared was slit, except for 140 °C re-stretching temperature. The re-stretching temperature less than 150 °C could not achieve a sufficient in-plane uniformity of extension rate at 150 °C measured by the TMA.

### [Comparative example 7]

A film roll was produced by the same method as Example 2 in which a polyphenylene sulfide film prepared was slit, except for 210 °C relaxation temperature. Since the relaxation treatment was performed at a temperature closer to 150 °C less than 230 °C, width directional extension rate at 230 °C was decreased while width directional extension rate at 150 °C was increased.

### [Comparative Example 8]

The polyphenylene sulfide film which has been prepared by the same method as Comparative example 1 was set at a discharging part of roll-support type coater and was fed to a dry kiln heated to 200 °C in which a heat-treated polyphenylene sulfide film was prepared by a continuous heating process. The heating time was 60 sec. When the heating process was performed, a roll-up process performed by a winder applied tensile stress of 0.1 kgf as a value equivalent to film having a cross-sectional area of 1 m width and 40 µm thickness to the polyphenylene sulfide film. The heating process was performed without stress applied laterally.

Tables show characteristics of polyphenylene sulfide films obtained in Examples and Comparative Examples.

**[Table 1]**

| | Production condition | | | | | | | | | | | | | |
|---|---|---|---|---|---|---|---|---|---|---|---|---|---|---|
| | Longitudinal stretching | | Lateral stretching | | Thermal fixation | Relaxation | | Re-stretching | | Winding | Slitting | | | |
| | | | | | | | | | | Intermediate product | Edge 1 | Film roll | | Edge 2 |
| | Temp | Draw ratio | Temp | Draw ratio | Temp | Temp | Relaxation Rate | Temp | Draw ratio | Width | Width | Width | Number | Width |
| | C | times | °C | times | °C | °C | % | °C | % | mm | mm | mm | pieces | mm |
| Example 1 | 100 | 3.7 | 100 | 3.4 | 265 | 260 | 7.5 | 200 | 1.5 | 2500 | 450 | 800 | 2 | 450 |
| Example 2 | 100 | 3.7 | 100 | 3.4 | 265 | 260 | 7.5 | 200 | 1.5 | 2500 | 250 | 1000 | 2 | *250* |
| Example 3 | 100 | 3.7 | 100 | 3.4 | 265 | 260 | 7.5 | 200 | 1.5 | 2500 | 500 | 1500 | 1 | 500 |
| Example 4 | 100 | 3.7 | 100 | 3.4 | 265 | 260 | 7.5 | 200 | 4.0 | 2500 | 250 | 1000 | 2 | 250 |
| Example 5 | 100 | 3.7 | 100 | 3.4 | 265 | 260 | 7.5 | 200 | 0.5 | 2500 | 250 | 1000 | 2 | 250 |
| Example 6 | 100 | 3.7 | 100 | 3.4 | 265 | 260 | 5.0 | 200 | 1.5 | 2500 | 250 | 1000 | 2 | 250 |
| Example 7 | 100 | 3.7 | 100 | 3.4 | 265 | 260 | 8.5 | 200 | 1.5 | 2500 | 250 | 1000 | 2 | 250 |
| Example 8 | 100 | 3.7 | 100 | 3.4 | 265 | 260 | 7.5 | 240 | 1.5 | 2500 | 250 | 1000 | 2 | 250 |
| Example 9 | 100 | 3.7 | 100 | 3.4 | 265 | 260 | 7.5 | 160 | 1.5 | 2500 | 250 | 1000 | 2 | 250 |
| Example 10 | 100 | 3.7 | 100 | 3.4 | 265 | 240 | 7.5 | 200 | 1.5 | 2500 | 250 | 1000 | 2 | 250 |
| Example 11 | 100 | 3.4 | 100 | 3.7 | 265 | 260 | 7.5 | 200 | 4.0 | 2500 | 250 | 1000 | 2 | 250 |
| Example 12 | 100 | 3.7 | 100 | 3.4 | 265 | 260 | 7.5 | 200 | 1.5 | 2500 | 250 | 1000 | 2 | 250 |
| Example 13 | 100 | 3.7 | 100 | 3.4 | 265 | 260 | 7.5 | 200 | 1.5 | 2500 | 250 | 1000 | 2 | 250 |
| Example 14 | 100 | 3.7 | 100 | 3.4 | 265 | 260 | 7.5 | 200 | 1.5 | 2500 | 250 | 1000 | 2 | 250 |
| Example 15 | 100 | 3.7 | 100 | 3.4 | 265 | 260 | 7.5 | 200 | 1.5 | 2500 | 250 | 1000 | 2 | 250 |

**[Table 2]**

| | Production condition | | | | | | | | | | | | | |
|---|---|---|---|---|---|---|---|---|---|---|---|---|---|---|
| | Longitudinal stretching | | Lateral stretching | | Thermal fixation | Relaxation | | Re-stretching | | Winding | Slitting | | | |
| | | | | | | | | | | intermediate | Edge 1 | Film roll | | Edge 2 |
| | Temp | Draw ratio | Temp | Draw ratio | Temp | Temp | Relaxation Rate | Temp | Draw ratio | Width | Width | Width | Number | Width |
| | °C | times | °C | times | °C | c | % | °C | % | mm | mm | mm | pieces | mm |
| Comparative example 1 | 100 | 3.7 | 100 | 3.4 | 265 | 260 | 7.5 | - | - | 2500 | 250 | 1000 | 2 | 250 |
| Comparative example 2 | 100 | 3.7 | 100 | 3.4 | 265 | 260 | 7.5 | 200 | 7.5 | Film breakage could not produce a film roll | | | | |
| Comparative example 3 | 100 | 3.7 | 100 | 3.4 | 265 | 260 | 1.5 | 200 | 1.5 | 2500 | 250 | 1000 | 2 | 250 |
| Comparative example 4 | 100 | 3.7 | 100 | 3.4 | 265 | 260 | 9.5 | 200 | 1.5 | 2500 | 250 | 1000 | 2 | 250 |
| Comparative example 5 | 100 | 3.7 | 100 | 3.4 | 265 | 260 | 7.5 | 260 | 1.5 | 2500 | 250 | 1000 | 2 | 250 |
| Comparative example 6 | 100 | 3.7 | 100 | 3.4 | 265 | 260 | 7.5 | 140 | 1.5 | 2500 | 250 | 1000 | 2 | 250 |
| Comparative example 7 | 100 | 3.7 | 100 | 3.4 | 265 | 210 | 7.5 | 200 | 1.5 | 2500 | 250 | 1000 | 2 | 250 |
| Comparative example 8 | 100 | 3.7 | 100 | 3.4 | 265 | 260 | 7.5 | - | - | 2500 | 250 | 1000 | 2 | 250 |

**[Table 3-1]**

| | | Film characteristics | | | | | | | | | | |
|---|---|---|---|---|---|---|---|---|---|---|---|---|
| | | Thickness | TMA | | | | | | | | | |
| | | | Point A | | | | | | | | | |
| | | | 150°C extension rate | | | | | 230°C extension rate | | | | Width directional extension rate variation |
| | | | Longitudinal direction | 45° direction | Width direction | 135° direction | Max - Min | Longitudinal direction | 45° direction | Width direction | 135° direction | |
| | | *µ*m | % | % | % | % | % | % | % | % | % | % |
| Example 1 | Film roll 1 | 4 | 0.5 | 1.0 | 1.3 | 0.9 | 0.8 | 1.1 | 3.4 | 6.4 | 3.2 | 5.1 |
| | Film roll 2 | 4 | 0.6 | 1.1 | 1.5 | 1.0 | 0.9 | 1.2 | 3.2 | 7.1 | 3.3 | 5.6 |
| Example 2 | Film roll 1 | 4 | 0.6 | 1.1 | 1.4 | 1.0 | 0.8 | 1.0 | 3.6 | 6.2 | 3.1 | 4.8 |
| | Film roll 2 | 4 | 0.6 | 1.1 | 1.5 | 1.0 | 0.9 | 1.2 | 3.2 | 7.1 | 3.3 | 5.6 |
| Example 3 | Film roll 1 | 4 | 0.5 | 0.9 | 1.3 | 0.9 | 0.8 | 1.1 | 3.3 | 6.5 | 3.2 | 5.2 |
| Example 4 | Film roll 1 | 4 | 0.5 | 0.7 | 1.0 | 0.7 | 0.5 | 0.9 | 3.1 | 5.9 | 3.0 | 4.9 |
| | Film roll 2 | 4 | 0.5 | 0.8 | 1.1 | 0.7 | 0.6 | 1.0 | 3.0 | 6.6 | 2.9 | 5.5 |
| Example 5 | Film roll 1 | 4 | 0.6 | 1.5 | 1.9 | 1.6 | 1.3 | 1.3 | 4.2 | 6.5 | 2.6 | 4.6 |
| | Film roll 2 | 4 | 0.7 | 1.6 | 2.1 | 1.8 | 1.4 | 1.5 | 3.5 | 7.5 | 3.5 | 5.4 |
| Example 6 | Film roll 1 | 4 | 0.3 | 0.8 | 1.1 | 0.7 | 0.8 | 0.8 | 2.6 | 3.8 | 2.1 | 2.7 |
| | Film roll 2 | 4 | 0.4 | 0.9 | 1.2 | 0.8 | 0.8 | 0.9 | 2.2 | 4.3 | 2.2 | 3.1 |
| Example 7 | Film roll 1 | 4 | 0.5 | 1.2 | 2.0 | 1.3 | 1.5 | 1.4 | 8.7 | 9.2 | 7.1 | 7.2 |
| | Film roll 2 | 4 | 0.7 | 1.4 | 2.2 | 1.6 | 1.5 | 1.7 | 8.1 | 10.6 | 8.0 | 8.4 |
| Example 8 | Film roll 1 | 4 | 0.6 | 1.4 | 1.9 | 1.4 | 1.3 | 1.0 | *2.7* | 4.3 | 1.6 | 2.4 |
| | Film roll 2 | 4 | 0.7 | 1.6 | 2.0 | 1.5 | 1.3 | 1.1 | 2.1 | 4.8 | 2.2 | 2.8 |
| Example 9 | Film roll 1 | 4 | 0.4 | 0.7 | 1.0 | 0.7 | 0.6 | 1.1 | 7.9 | 8.1 | 6.8 | 7.1 |
| | Film roll 2 | 4 | 0.5 | 0.7 | 1.1 | 0.7 | 0.6 | 1.3 | 7.3 | 9.3 | 7.5 | 8.2 |
| Example 10 | Film roll 1 | 4 | 0.5 | 1.5 | 1.9 | 1.4 | 1.4 | 1.3 | 7.2 | 7.7 | 6.1 | 5.8 |
| | Film roll 2 | 4 | 0.7 | 1.7 | 2.0 | 1.6 | 1.3 | 1.6 | 6.5 | 8.6 | 6.7 | 6.6 |
| Example 11 | Film roll 1 | 4 | 0.7 | 2.0 | 1.7 | 2.0 | 1.3 | 2.8 | 3.9 | 4.2 | 3.2 | 2.5 |
| | Film roll 2 | 4 | 0.9 | 2.2 | 1.8 | 2.2 | 1.3 | 3.2 | 3.3 | 4.8 | 3.3 | 3.0 |
| Example 12 | Film roll 1 | 2 | 1.1 | 2.0 | 2.5 | 1.9 | 1.4 | 5.1 | 10.8 | 11.1 | 8.8 | 8.6 |
| | Film roll 2 | 2 | 1.3 | 2.3 | 2.7 | 2.1 | 1.4 | 5.3 | 9.7 | 12.3 | 9.9 | 9.6 |

**[Table 3-2]**

| | | Film characteristics | | | | | | | | | | | |
|---|---|---|---|---|---|---|---|---|---|---|---|---|---|
| | | TMA | | | | | | | | | | | |
| | | Point B | | | | | | | | | | Difference of 230°C extension rate between points A and B | |
| | | 150°C extension rate | | | | | 230°C extension rate | | | | Width directional extension rate variation | | |
| | | Longitudinal direction | 45° direction | Width direction | 135° direction | Max - Min | Longitudinal direction | 45° direction | Width direction | 135° direction | | 45° direction | 135° direction |
| | | % | % | % | % | % | % | % | % | % | % | % | % |
| Example 1 | **Film** roll 1 | 0.6 | 1.1 | 1.5 | 1.0 | 0.9 | 1.2 | 3.2 | 7.1 | 3.3 | 5.6 | 0.2 | 0.1 |
| | Film roll 2 | 0.5 | 1.0 | 1.3 | 1.0 | 0.8 | 1.1 | 3.1 | 6.6 | 3.5 | 5.3 | 0.1 | 0.2 |
| Example 2 | Film roll 1 | 0.6 | 1.1 | 1.5 | 1.0 | 0.9 | 1.2 | 3.2 | 7.1 | 3.3 | 5.6 | 0.4 | 0.2 |
| | Film roll 2 | 0.6 | 1.0 | 1.4 | 1.0 | 0.8 | 1.1 | 3.3 | 6.4 | 3.7 | 4.9 | 0.1 | 0.4 |
| Example 3 | Film roll 1 | 0.5 | 0.9 | 1.3 | 1.0 | 0.8 | 1.2 | 3.2 | 6.6 | 3.4 | 5.3 | 0.1 | 0.2 |
| Example 4 | Film roll 1 | 0.5 | 0.8 | 1.1 | 0.7 | 0.6 | 1.0 | 3.0 | 6.6 | 2.9 | 5.5 | 0.1 | 0.1 |
| | Film roll 2 | 0.5 | 0.7 | 1.0 | 0.8 | 0.5 | 1.0 | 2.9 | 6.0 | 3.1 | 5.0 | 0.1 | 0.2 |
| Example 5 | Film roll 1 | 0.7 | 1.6 | 2.1 | 1.8 | 1.4 | 1.5 | 3.5 | 7.5 | 3.5 | 5.4 | 0.7 | 0.9 |
| | Film roll 2 | 0.6 | 1.5 | 2.0 | 1.7 | 1.4 | 1.2 | 2.7 | 6.6 | 4.1 | 4.6 | 0.8 | 0.6 |
| Example 6 | Film roll 1 | 0.4 | 0.9 | 1.2 | 0.8 | 0.8 | 0.9 | 2.2 | 4.3 | 2.2 | 3.1 | 0.4 | 0.1 |
| | Film roll 2 | 0.3 | 0.7 | 1.1 | 0.7 | 0.8 | 0.8 | 2.0 | 3.7 | 2.6 | 2.6 | 0.2 | 0.4 |
| Example 7 | Film roll 1 | 0.7 | 1.4 | 2.2 | 1.6 | 1.5 | 1.7 | 8.1 | 10.6 | 8.0 | 8.4 | 0.6 | 0.9 |
| | Film roll 2 | 0.6 | 1.3 | 2.1 | 1.4 | 1.5 | 1.5 | 7.2 | 9.3 | 8.8 | 7.2 | 0.9 | 0.8 |
| Example 8 | Film roll 1 | 0.7 | 1.6 | 2.0 | 1.5 | 1.3 | 1.1 | 2.1 | 4.8 | 2.2 | 2.8 | 0.6 | 0.6 |
| | Film roll 2 | 0.5 | 1.3 | 1.8 | 1.3 | 1.3 | 1.0 | 1.5 | 4.4 | 2.9 | 2.6 | 0.6 | 0.7 |
| Example 9 | Film roll 1 | 0.5 | 0.7 | 1.1 | 0.7 | 0.6 | 1.3 | 7.3 | 9.3 | 7.5 | 8.2 | 0.6 | 0.7 |
| | Film roll 2 | 0.4 | 0.6 | 1.0 | 0.7 | 0.6 | 1.1 | 6.7 | 8.3 | 8.2 | 7.3 | 0.6 | 0.7 |
| Example 10 | Film roll 1 | 0.7 | 1.7 | 2.0 | 1.6 | 1.3 | 1.6 | 6.5 | 8.6 | 6.7 | 6.6 | 0.7 | 0.6 |
| | Film roll 2 | 0.5 | 1.4 | 1.8 | 1.4 | 1.3 | 1.2 | 5.9 | 7.9 | 7.3 | 6.1 | 0.6 | 0.6 |
| Example 11 | Film roll 1 | 0.9 | 2.2 | 1.8 | 2.2 | 1.3 | 3.2 | 3.3 | 4.8 | 3.3 | 3.0 | 0.6 | 0.1 |
| | Film roll 2 | 0.6 | 2.0 | 1.6 | 2.0 | 1.4 | 2.8 | 3.2 | 4.4 | 4.0 | 2.8 | 0.1 | 0.7 |
| Example 12 | Film roll 1 | 1.3 | 2.3 | 2.7 | 2.1 | 1.4 | 5.3 | 9.7 | 12.3 | 9.9 | 9.6 | 1.1 | 1.1 |
| | Film roll 2 | 1.0 | 1.9 | 2.4 | 1.8 | 1.4 | 4.9 | 8.8 | 11.3 | 11.0 | 8.9 | 0.9 | 1.1 |

**[Table 4-1]**

| | | Film characteristics | | | | | | | | | | |
|---|---|---|---|---|---|---|---|---|---|---|---|---|
| | | Thickness | TMA | | | | | | | | | |
| | | | Point A | | | | | | | | | |
| | | | 150°C extension rate | | | | | 230°C extension rate | | | | Width directional extension rate variation |
| | | | Longitudinal direction | 45° direction | Width direction | 135° direction | Max - Min. | Longitudinal direction | 45° direction | Width direction | 135° direction | |
| | | *µ*m | % | % | % | % | % | % | % | % | % | % |
| Example 13 | Film roll 1 | 9 | 0.4 | 0.7 | 1.2 | 0.8 | 0.8 | 0.6 | 3.6 | 4.2 | 3.1 | 3.0 |
| | Film roll 2 | 9 | 0.5 | 0.8 | 1.4 | 0.9 | 0.9 | 0.7 | 3.2 | 4.7 | 3.3 | 3.3 |
| Example 14 | Film roll 1 | 12 | 0.1 | 0.5 | 0.9 | 0.5 | 0.8 | 0.0 | 1.8 | 2.7 | 1.4 | 1.8 |
| | Film roll 2 | 12 | 0.1 | 0.6 | 0.9 | 0.5 | 0.8 | 0.0 | 1.5 | 3.2 | 1.5 | 2.3 |
| Example 15 | Film roll 1 | 25 | 0.0 | 0.3 | 0.8 | 0.4 | 0.8 | 0.0 | 1.5 | 1.8 | 1.1 | 1.0 |
| | Film roll 2 | 25 | 0.1 | 0.5 | 0.9 | 0.5 | 0.8 | 0.0 | 1.3 | 2.2 | 1.2 | 1.3 |
| Comparative example 1 | Film roll 1 | 4 | 0.6 | 2.1 | 2.5 | 2.0 | 1.9 | 1.2 | 6.9 | 7.3 | 2.6 | 4.8 |
| | Film roll 2 | 4 | 0.8 | 2.5 | 2.9 | 2.3 | 2.1 | 1.4 | 3.8 | 8.1 | 3.9 | 5.2 |
| Comparative example 2 | Film roll 1 | Film breakage could not produce a film roll | | | | | | | | | | |
| Comparative example 3 | Film roll 1 | 4 | 0.3 | 0.6 | 0.9 | 0.6 | 0.6 | 0.6 | -0.3 | -1.2 | -0.8 | -2.1 |
| | Film roll 2 | 4 | 0.4 | 0.6 | 0.9 | 0.7 | 0.5 | 0.7 | -0.5 | -1.1 | -0.6 | -2.0 |
| Comparative example 4 | Film roll 1 | 4 | 0.5 | *1.7* | 2.4 | 1.8 | 1.9 | 2.0 | 12.2 | 12.5 | 9.3 | 10.1 |
| | Film roll 2 | 4 | 0.7 | 2.0 | 2.5 | 2.0 | 1.8 | 2.3 | 10.8 | 13.7 | 10.6 | 11.2 |
| Comparative example 5 | Film roll 1 | 4 | 0.6 | 2.0 | 2.3 | 1.8 | 1.7 | 0.8 | 3.1 | 4.1 | 0.8 | 1.8 |
| | Film roll 2 | 4 | 0.8 | 2.2 | 2.7 | 2.1 | 1.9 | 0.9 | 1.8 | 4.7 | 1.7 | 2.0 |
| Comparative example 6 | Film roll 1 | 4 | 0.6 | 1.7 | 2.3 | 1.7 | 1.7 | 1.1 | 8.4 | 8.6 | 6.2 | 6.3 |
| | Film roll 2 | 4 | 0.7 | 1.9 | 2.4 | 1.8 | 1.7 | 1.3 | 7.4 | 9.8 | 7.7 | 7.4 |
| Comparative example 7 | Film roll 1 | 4 | 0.7 | 1.5 | 2.2 | 1.6 | 1.5 | -1.0 | -0.8 | -0.6 | -0.2 | -2.8 |
| | Film roll 2 | 4 | 0.8 | 1.7 | 2.3 | 1.8 | 1.5 | -0.9 | -0.6 | -0.4 | -0.6 | -2.7 |
| Comparative example 8 | Film roll 1 | 4 | 0.8 | 2.7 | 3.1 | 2.4 | 2.3 | 1.4 | 7.3 | 8.2 | 3.0 | 5.1 |
| | Film roll 2 | 4 | 1.0 | 2.8 | 3.4 | 2.9 | 2.4 | 1.7 | 3.8 | 8.8 | 3.9 | 5.4 |

**[Table 4-2]**

| | | Film characteristics | | | | | | | | | | | |
|---|---|---|---|---|---|---|---|---|---|---|---|---|---|
| | | TMA | | | | | | | | | | | |
| | | Point B | | | | | | | | | | Difference of 230°C extension rate between points A and B | |
| | | 150°C extension rate | | | | | 230°C extension rate | | | | Width directional extension rate variation | | |
| | | Longitudinal direction | 45° direction | Width direction | 135° direction | Max. - Min. | Longitudinal direction | 45° direction | Width direction | 135° direction | | 45° direction | 135° direction |
| | | % | % | % | % | % | % | % | % | % | % | % | % |
| Example 13 | Film roll 1 | 0.5 | 0.8 | 1.4 | 0.9 | 0.9 | 0.7 | 3.2 | 4.7 | 3.3 | 3.3 | 0.4 | 0.2 |
| | Film roll 2 | 0.5 | 0.6 | 1.3 | 0.7 | 0.8 | 0.6 | 3.0 | 4.1 | 3.6 | 2.8 | 0.2 | 0.3 |
| Example 14 | Film roll 1 | 0.1 | 0.6 | 0.9 | 0.5 | 0.8 | 0.0 | 1.5 | 3.2 | 1.5 | 2.3 | 0.3 | 0.1 |
| | Film roll 2 | 0.0 | 0.5 | 0.8 | 0.4 | 0.8 | 0.0 | 1.3 | 2.9 | 1.8 | 2.1 | 0.2 | 0.3 |
| Example 15 | Film roll 1 | 0.1 | 0.5 | 0.9 | 0.5 | 0.8 | 0.0 | 1.3 | 2.2 | 1.2 | 1.3 | 0.2 | 0.1 |
| | Film roll 2 | 0.0 | 0.3 | 0.8 | 0.3 | 0.8 | 0.0 | 1.2 | 1.9 | 1.4 | 1.1 | 0.1 | 0.2 |
| Comparative example 1 | Film roll 1 | 0.8 | 2.5 | 2.9 | 2.3 | 2.1 | 1.4 | 3.8 | 8.1 | 3.9 | 5.2 | 3.1 | 1.3 |
| | Film roll 2 | 0.7 | 2.2 | 2.5 | 1.9 | 1.8 | 1.3 | 2.4 | 7.1 | 6.7 | 4.6 | 1.4 | 2.8 |
| Comparative example 2 | Film roll 1 | Film breakage could not produce a film roll | | | | | | | | | | | |
| Comparative example 3 | Film roll 1 | 0.4 | 0.6 | 0.9 | 0.7 | 0.5 | 0.7 | -0.5 | -1.1 | -0.6 | -2.0 | 0.2 | 0.2 |
| | Film roll 2 | 0.3 | 0.5 | 0.8 | 0.6 | 0.5 | 0.6 | -0.7 | -1.3 | -0.4 | -2.1 | 0.2 | 0.2 |
| Comparative example **4** | Film roll 1 | 0.7 | 2.0 | 2.5 | 2.0 | 1.8 | 2.3 | 10.8 | 13.7 | 10.6 | 11.2 | 1.4 | 1.3 |
| | Film roll 2 | 0.6 | 1.8 | 2.3 | 1.9 | 1.7 | 2.1 | 9.4 | 12.3 | 11.9 | 10.0 | 1.4 | 1.3 |
| Comparative example 5 | Film roll 1 | 0.8 | 2.2 | 2.7 | 2.1 | 1.9 | 0.9 | 1.8 | 4.7 | 1.7 | 2.0 | 1.3 | 0.9 |
| | Film roll 2 | 0.7 | 1.9 | 2.4 | 1.7 | 1.7 | 0.8 | 1.0 | 4.0 | 3.1 | 1.6 | 0.8 | 1.4 |
| Comparative example 6 | Film roll 1 | 0.7 | 1.9 | 2.4 | 1.8 | 1.7 | 1.3 | 7.4 | 9.8 | 7.7 | 7.4 | 1.0 | 1.5 |
| | Film roll 2 | 0.5 | 1.7 | 2.2 | 1.5 | 1.7 | 1.1 | 8.7 | 8.9 | 6.6 | 6.7 | 1.3 | 1.1 |
| Comparative example 7 | Film roll 1 | 0.8 | 1.7 | 2.3 | 1.8 | 1.5 | -0.9 | -0.6 | -0.4 | -0.6 | -2.7 | 0.2 | 0.4 |
| | Film roll 2 | 0.6 | 1.5 | 2.1 | 1.6 | 1.5 | -1.1 | -0.1 | -0.6 | -0.8 | -2.8 | 0.5 | 0.2 |
| Comparative example 8 | Film roll 1 | 1.0 | 2.8 | 3.4 | 2.9 | 2.4 | 1.7 | 3.8 | 8.8 | 3.9 | 5.4 | 3.5 | 0.9 |
| | Film roll 2 | 0.7 | 2.3 | 3.0 | 2.5 | 2.3 | 1.4 | 3.0 | 8.0 | 7.2 | 5.0 | 0.8 | 3.3 |

**[Table 5-1]**

| | | Film characteristics | | | | | | | | | | |
|---|---|---|---|---|---|---|---|---|---|---|---|---|
| | | DSC | | Tensile test | | | | Molecular orientation meter | | DMA | | |
| | | Crystallinity | Crystallization Temp Tec | Longitudinal direction F2 | Longitudinal direction F5 | Longitudinal direction (F5-F2) | Difference between Max and Min of longitudinal tensile elastic modulus | Longitudinal dielectric constant *ε*'_{MD} | MOR_c | Longitudinal 90°C storage elastic modulus E'_{MD90} | Longitudinal 100°C storage elastic modulus E'_{MD100} | E'_{MD10D} / E'_{MD90} |
| | | % | °C | MPa | MPa | MPa | MPa | - | - | GPa | GPa | - |
| Example 1 | Film roll 1 | 33 | 140 | 69 | 109 | 40 | 18 | 3.20 | 1.06 | 5.85 | 5.56 | 0.95 |
| | Film roll 2 | 33 | 140 | 69 | 109 | 40 | 18 | 3.20 | 1.06 | 5.85 | 5.56 | 0.95 |
| Example 2 | Film roll 1 | 33 | 140 | 69 | 109 | 40 | 23 | 3.20 | 1.07 | 5.85 | 5.56 | 0.95 |
| | Film roll 2 | 33 | 140 | 69 | 109 | 40 | 23 | 3.20 | 1.07 | 5.85 | 5.56 | 0.95 |
| Example 3 | Film roll 1 | 33 | 140 | 69 | 109 | 40 | 14 | 3.20 | 1.06 | 5.85 | 5.55 | 0.95 |
| Example 4 | Film roll 1 | 33 | 140 | 69 | 109 | 40 | 12 | 3.20 | 1.03 | 5.81 | 5.52 | 0.95 |
| | Film roll 2 | 33 | 140 | 69 | 109 | 40 | 12 | 3.20 | 1.03 | 5.81 | 5.52 | 0.95 |
| Example 5 | Film roll 1 | 33 | 140 | 69 | 109 | 40 | 53 | 3.20 | 1.19 | 5.88 | 5.59 | 0.95 |
| | Film roll 2 | 33 | 140 | 69 | 109 | 40 | 53 | 3.20 | 1.19 | 5.88 | 5.59 | 0.95 |
| Example 6 | Film roll 1 | 33 | 140 | 71 | 109 | 38 | 21 | 3.18 | 1.07 | 5.89 | 5.60 | 0.95 |
| | Film roll 2 | 33 | 140 | 71 | 109 | 38 | 21 | 3.18 | 1.07 | 5.89 | 5.60 | 0.95 |
| Example 7 | Film roll 1 | 33 | 140 | 67 | 107 | 40 | 47 | 3.22 | 1.07 | 5.80 | 5.51 | 0.95 |
| | Film roll 2 | 33 | 140 | 67 | 107 | 40 | 47 | 3.22 | 107 | 5.80 | 5.51 | 0.95 |
| Example 8 | Film roll 1 | 33 | 140 | 69 | 109 | 40 | 56 | 3.20 | 1.14 | 5.74 | 5.28 | 0.92 |
| | Film roll 2 | 33 | 140 | 69 | 109 | 40 | 56 | 3.20 | 1.14 | 5.74 | 5.28 | 0.92 |
| Example 9 | Film roll 1 | 33 | 140 | 69 | 109 | 40 | 33 | 3.20 | 1.04 | 5.87 | 5.64 | 0.96 |
| | Film roll 2 | 33 | 140 | 69 | 109 | 40 | 33 | 3.20 | 1.04 | 5.87 | 5.64 | 0.96 |
| Example 10 | Film roll 1 | 33 | 140 | 70 | 109 | 39 | 35 | 3.19 | 1.13 | 5.86 | 5.57 | 0.95 |
| | Film roll 2 | 33 | 140 | 70 | 109 | 39 | 35 | 3.19 | 1.13 | 5.86 | 5.57 | 0.95 |
| Example 11 | Film roll 1 | 33 | 140 | 66 | 103 | 37 | 63 | 3.26 | 1.23 | 5.77 | 5.42 | 0.94 |
| | Film roll 2 | 33 | 140 | 66 | 103 | 37 | 63 | 3.26 | 1.23 | 5.77 | 5.42 | 0.94 |
| Example 12 | Film roll 1 | 33 | 140 | 69 | 109 | 40 | 32 | 3.20 | 1.12 | 5.85 | 5.56 | 0.95 |
| | Film roll 2 | 33 | 140 | 69 | 109 | 40 | 32 | 3.20 | 1.12 | 5.85 | 5.56 | 0.95 |

**[Table 5-2]**

| | | Workability | | | | |
|---|---|---|---|---|---|---|
| | | Metal layer vapor deposition formation | | Electrode material layer formation | Rolling electrode The formation | Rolled body formation |
| | | Wrinkle | Rolling-up performance | Thickness uniformity | Detachment /Wrinkle | Rolling-up performance |
| | | - | - | - | - | - |
| Example 1 | Film roll 1 | B | A | B | A | A |
| | Film roll 2 | | | | | |
| Example 2 | Film roll 1 | B | B | B | A | A |
| | Film roll 2 | | | | | |
| Example 3 | Film roll 1 | B | A | B | A | A |
| Example 4 | Film roll 1 | B | A | A | A | A |
| | Film roll 2 | | | | | |
| Example 5 | Film roll 1 | B | C | C | A | A |
| | Film roll 2 | | | | | |
| Example 6 | Film roll 1 | A | B | B | A | A |
| | Film roll 2 | | | | | |
| Example 7 | Film roll 1 | C | C | C | A | A |
| | Film roll 2 | | | | | |
| Example 8 | Film roll 1 | A | C | C | C | A |
| | Film roll 2 | | | | | |
| Example 9 | Film roll 1 | C | C | A | A | A |
| | Film roll 2 | | | | | |
| Example 10 | Film roll 1 | B | C | C | A | A |
| | Film roll 2 | | | | | |
| Example 11 | Film roll 1 | A | C | C | B | B |
| | Film roll 2 | | | | | |
| Example 12 | Film roll 1 | C | C | C | A | A |
| | Film roll 2 | | | | | |

**[Table 6-1]**

| | | Film characteristics | | | | | | | | | | |
|---|---|---|---|---|---|---|---|---|---|---|---|---|
| | | DSC | | Tensile test | | | | Molecular orientation meter | | DMA | | |
| | | Crystallinity | Crystallization Temp Tec | Longitudinal direction F2 | Longitudinal direction F5 | Longitudinal direction (F5-F2) | Difference between Max. and Min. of longitudinal tensile elastic modulus | Longitudinal dielectric constant ε'_{MD} | MOR_c | Longitudinal 90°C storage elastic modulus E'_{MD90} | Longitudinal 100°C storage elastic modulus E'_{MD100} | E'_{M'D100} / E'_{MD90} |
| | | | C | MPa | MPa | MPa | MPa | - | - | GPa | GPa | - |
| Example 13 | Film roll 1 | 33 | 140 | 69 | 109 | 40 | 25 | 3.2 | 1.07 | 5.85 | 5.56 | 0.95 |
| | Film roll 2 | 33 | 140 | 69 | 109 | 40 | 25 | 3.2 | 1.07 | 5.85 | 5.56 | 0.95 |
| Example 14 | Film roll 1 | 33 | 140 | 69 | 109 | 40 | 28 | 3.2 | 1.08 | 5.85 | 5.56 | 0.95 |
| | Film roll 2 | 33 | 140 | 69 | 109 | 40 | 28 | 3.2 | 1.08 | 5.85 | 5.56 | 0.95 |
| Example 15 | Film roll 1 | 33 | 140 | 69 | 109 | 40 | 29 | 3.2 | 1.09 | 5.85 | 5.56 | 0.95 |
| | Film roll 2 | 33 | 140 | 69 | 109 | 40 | 29 | 3.2 | 1.09 | 5.85 | 5.56 | 0.95 |
| Comparative example 1 | Film roll 1 | 33 | 140 | 69 | 109 | 40 | 79 | 3.2 | 1.41 | 5.89 | 5.60 | 0.95 |
| | Film roll 2 | 33 | 140 | 69 | 109 | 40 | 79 | 3.2 | 1.41 | 5.89 | 5.60 | 0.95 |
| Comparative example 2 | Film roll 1 | \| cannot gather it by a film tear | | | | | | | | | | |
| Comparative example 3 | Film roll 1 | 33 | 140 | 71 | 110 | 39 | 8 | 3.15 | 1.02 | 5.90 | 5.61 | 0.95 |
| | Film roll 2 | 33 | 140 | 71 | 110 | 39 | 8 | 3.15 | 1.02 | 5.90 | 5.61 | 0.95 |
| Comparative example 4 | Film roll 1 | 33 | 140 | 67 | 106 | 39 | 66 | 3.24 | 1.33 | 5.79 | 5.50 | 0.95 |
| | Film roll 2 | 33 | 140 | 67 | 106 | 39 | 66 | 3.24 | 1.33 | 5.79 | 5.50 | 0.95 |
| Comparative example 5 | Film roll 1 | 33 | 140 | 69 | 109 | 40 | 74 | 3.2 | 1.37 | 5.74 | 5.22 | 0.91 |
| | Film roll 2 | 33 | 140 | 69 | 109 | 40 | 74 | 3.2 | 1.37 | 5.74 | 5.22 | 0.91 |
| Comparative example 6 | Film roll 1 | 33 | 140 | 69 | 109 | 40 | 63 | 3.2 | 1.32 | 5.95 | 5.65 | 0.96 |
| | Film roll 2 | 33 | 140 | 69 | 109 | 40 | 63 | 3.2 | 1.32 | 5.95 | 5.65 | 0.96 |
| Comparative example 7 | Film roll 1 | 33 | 140 | 69 | 109 | 40 | 27 | 3.2 | 1.15 | 5.86 | 5.58 | 0.95 |
| | Film roll 2 | 33 | 140 | 69 | 109 | 40 | 27 | 3.2 | 1.15 | 5.86 | 5.58 | 0.95 |
| Comparative example 8 | Film roll 1 | 33 | 140 | 67 | 102 | 35 | 86 | 3.33 | 1.39 | 5.77 | 5.19 | 0.90 |
| | Film roll 2 | 33 | 140 | 67 | 102 | 35 | 86 | 333 | 1.39 | 5.77 | 5.19 | 0.90 |

**[Table 6-2]**

| | | Metal layer vapor deposition formation | | Electrode material layer formation | Rolling electrode The formation | Rolled body formation |
|---|---|---|---|---|---|---|
| | | Wrinkle | Rolling-up performance | Thickness uniformity | Detachment /Wrinkle | Rolling-up performance |
| | | - | - | - | - | - |
| Example 13 | Film roll 1 | A | B | B | A | A |
| | Film roll 2 | | | | | |
| Example 14 | Film roll 1 | A | B | B | A | A |
| | Film roll 2 | | | | | |
| Example 15 | Film roll 1 | A | B | B | A | A |
| | Film roll 2 | | | | | |
| Comparative example 1 | Film roll 1 | B | D | D | A | A |
| | Film roll 2 | | | | | |
| Comparative example 2 | Film roll 1 | - | - | - | - | - |
| Comparative example 3 | Film roll 1 | D | A | A | A | A |
| | Film roll 2 | | | | | |
| Comparative example 4 | Film roll 1 | D | D | D | A | A |
| | Film roll 2 | | | | | |
| Comparative example 5 | Film roll 1 | A | D | D | C | A |
| | Film roll 2 | | | | | |
| Comparative example 6 | Film roll 1 | C | D | D | A | A |
| | Film roll 2 | | | | | |
| Comparative example 7 | Film roll 1 | D | B | C | A | A |
| | Film roll 2 | | | | | |
| Comparative example 8 | Film roll 1 | B | D | D | C | C |
| | Film roll 2 | | | | | |

### Industrial Applications of the Invention

Our polyphenylene sulfide film can be used for various industrial purposes, and is specifically suitable for current collector foils because polyphenylene sulfide resin has excellent characteristics of heat resistance and chemical resistance.

## Claims

1. A polyphenylene sulfide film defined as a film chiefly comprising a polyphenylene sulfide, wherein a width directional extension rate determined by a Thermo-Mechanical Analysis (TMA) at 230 °C is 0.0 % or more and 13.0 % or less and a difference between a maximum and a minimum of extension rates in a longitudinal direction, a 45° direction, a width direction and a 135° direction determined at 150 °C by the TMA is 1.6% or less.

2. The polyphenylene sulfide film according to claim 1, having 0.0 % or more and 8.0 % or less of width directional extension rate variation between 150 °C and 230 °C determined by the TMA.

3. The polyphenylene sulfide film according to claim 1, wherein a film sample cut into 50 mm x 50 mm along the longitudinal and width directions has extension rates of 0.0% or more and 9.0 % or less, in the longitudinal direction, the 45° direction, the width direction and the 135° direction determined at 230 °C by the TMA.

4. The polyphenylene sulfide film according to claim 1, wherein a crystallinity calculated from a fusion enthalpy determined with a Differential Scanning Calorimeter (DSC) is 29 % or more and 40 % or less.

5. The polyphenylene sulfide film according to claim 1, wherein a stress F2 of 2% extension rate and a stress F5 of 5% extension rate of the film determined at a room temperature of 23 °C by a tensile test satisfy a formula of $36.0 \left[MPa\right] < F 5 - F 2 \leq 54.0 \left[MPa\right] .$

6. The polyphenylene sulfide film according to claim 1, wherein a longitudinal dielectric constant ε'_{MD} measured with a molecular orientation meter is 3.00 or more and 3.30 or less and an MOR_c (Corrected Molecular Orientation Ratio) is 1.00 or more and 1.30 or less.

7. The polyphenylene sulfide film according to claim 1, wherein a longitudinal storage elastic modulus E'_{MD90} [GPa] at 90 °C and a longitudinal storage elastic modulus E'_{MD100} [GPa] at 100 °C measured with Dynamic Mechanical Analysis (DMA) in a condition of a temperature increasing rate of 2 °C/min from 25 °C to 200 °C, a frequency of 1 Hz and a displacement of 10 µm satisfy a relation formula of $0.93 \leq E {′}_{MD 100} / E {′}_{MD 90} \leq 0.98 .$

8. The polyphenylene sulfide film according to claim 1, wherein a crystallization temperature Tcc measured with a Differential Scanning Calorimeter (DSC) is 136 °C or more and 155 °C or less.

9. The polyphenylene sulfide film according to claim 1, wherein the polyphenylene sulfide film comprises more than 98 mass% and 100 mass% or less of the polyphenylene sulfide resin among all components of 100 mass% in total constituting the polyphenylene sulfide film.

10. The polyphenylene sulfide film according to claim 1, wherein the polyphenylene sulfide resin has a melt flow rate of 40 g/10 min or more and 100 g/10 min or less determined at temperature of 315.6 °C and load of 5,000 g.

11. The polyphenylene sulfide film according to claim 1, wherein a thickness is 1 µm or more and 30 µm or less.

12. A metalized film comprising the polyphenylene sulfide film according to any one of claims 1 to 11, wherein a metal layer is provided on at least one surface side of the polyphenylene sulfide film.

13. A current collector foil comprising the polyphenylene sulfide film according to any one of claims 1 to 11, wherein a metal layer is provided on at least one side of the polyphenylene sulfide film.

14. An electrode plate comprising the current collector foil according to claim 13, wherein an electrode material layer is formed on a surface of the current collector foil.

15. A secondary battery comprising the electrode plate according to claim 14.

16. A polyphenylene sulfide film roll having a width of 700 mm or more and being made by rolling up a film chiefly comprising a polyphenylene sulfide, of which a width directional extension rate of a film sample cut into 50 mm x 50 mm along longitudinal and width directions determined at 230 °C by a Thermo-Mechanical Analysis (TMA) is 0.0 % or more and 13.0 % or less both at points A and B while a difference between a maximum and a minimum of the extension rates in a longitudinal direction, a 45° direction, a width direction and a 135° direction determined at 150 °C by the TMA is 1.6 % or less both at points A and B, wherein the point A is 50 mm away from one edge of the roll toward a center while the point B is 50 mm away from the other edge of the roll toward the center.

17. The polyphenylene sulfide film roll according to claim 16, wherein a difference between the extension rates at points A and B in the 45° direction determined at 230 °C is 1.2 % or less while a difference between the extension rates at points A and B in 135° direction determined at 230 °C is 1.2 % or less.

18. The polyphenylene sulfide film roll according to claim 16, wherein a width directional extension rate variation between 150 °C and 230 °C determined by the TMA is 0.0 % or more and 8.0 % or less both at point A and point B.

19. The polyphenylene sulfide film roll according to claim 16, wherein a difference between a maximum and a minimum of a longitudinal tensile elastic modulus along the width direction is 5 MPa or more and 60 MPa or less, according to a measurement method as follows:
(Measurement method) The difference between the maximum and the minimum of longitudinal tensile elastic modulus along the width direction is calculated from longitudinal tensile elastic moduli measured at 8 points along the width direction at intervals of 100 mm in 700 mm width part of which center is in a central region of film in the width direction along test length of 100 mm at tensile speed of 200 mm/min using test pieces cut into each size of 230 mm length and 10 mm width.

20. The polyphenylene sulfide film roll according to claim 16, wherein a film thickness is 1 µm or more and 30 µm or less.

21. A metalized film roll comprising the polyphenylene sulfide film according to any one of claims 16 to 20, wherein a metal layer is provided on at least one surface side of the polyphenylene sulfide film.

22. A current collector foil roll comprising the polyphenylene sulfide film according to any one of claims 16 to 20, wherein a metal layer is laminated on a surface of the polyphenylene sulfide film roll.

23. An electrode plate roll comprising the current collector foil roll according to claim 22, wherein an electrode material layer is formed on a surface of the current collector foil roll.
